# EUROPEAN PATENT SPECIFICATION

(11) **EP 3 459 735 B1**
(45) Date of publication and mention of the grant of the patent: **11.05.2022**
(21) Application number: 17799483.7
(22) Date of filing: 18.05.2017
(51) Int. Cl.: B32B 27/32, B29C 45/14, B32B 27/00, B29K 23/00, B32B 37/00, B29C 48/00, B32B 25/16, B32B 27/08, B32B 37/15, B29D 7/01

(54) **MULTILAYER FILM**
MEHRSCHICHTIGE FOLIE
FILM MULTICOUCHE

(30) Priority: 18.05.2016 JP 2016099207
(43) Date of publication of application: 27.03.2019
(73) Proprietor: Kuraray Co., Ltd., Okayama 710-0801 (JP)
(72) Inventor: KAWAKITA, Hiroshi, Tsukuba-shi Ibaraki 305-0841 (JP); TAKAHASHI, Katsuei, Tsukuba-shi Ibaraki 305-0841 (JP)
(74) Representative: Müller-Boré & Partner Patentanwälte PartG mbB
(86) International application number: PCT/JP2017/018733
(87) International publication number: WO 2017/200059

(56) References cited:
- EP-A1- 2 636 523
- WO-A1-02/078954
- WO-A1-2012/005270
- WO-A1-2013/161291
- WO-A1-2013/161291
- WO-A1-2016/125899
- JP-A- H06 166 143
- JP-A- 2002 355 850
- JP-A- 2015 117 335

## Description

The patent disclosure relates to a multilayer film having a structure consisting of at least three layers and a molded body obtained by stacking the multilayer film.

Ceramics, metals and synthetic resins excellent in view of industrial design, durability, heat resistance and mechanical strength are used in a wide variety of applications including home appliances, electronic parts, mechanical parts and automobile parts. In these members, different types of materials bonded or combined are sometimes used depending on, e.g., the constitution of a part and application. In particular, for the exterior of e.g., home appliances, wallpaper and interior of automobiles, decorative films made of a resin are used for decoration of a pattern such as a wood tone pattern, or an appearance such as metallic tone and piano black tone, or for imparting a function such as scratch resistance and weather resistance.

As a method for decorating a three-dimensional shape with these films, for example, a film insert molding method is used, which is a method of inserting a film in a die, followed by injecting molding. In this method, it is necessary to molding a film into a preform in advance (preform molding) so as to fit a mold shape. Patent Literature 1 describes a method for producing a bonded product by bonding a film formed of a thermoplastic polymer composition, which contains a block copolymer having a polymer block containing an aromatic vinyl compound unit and a polymer block containing a conjugate diene compound unit, or a hydrogenated product thereof, i.e., a thermoplastic elastomer, and an adhesive component, to an insert member, and then, insert-molding a resin member on the film. However, according to studies by the present inventors, they found that the film described in Patent Literature 1 has a problem in that moldability of a preform is poor since an adhesive surface is exposed. They also found that there is room for improvement in adhesive force of the film to an injected resin member.

Note that, Patent Literature 2 describes a multilayer article having a polycarbonate layer, a combining layer containing a copolymer, which contains an alkenyl aromatic compound and one or more types of conjugate diene structural units and a polypropylene layer; however, the literature does not describe problems in bonding the multilayer article to an adherend and effects.

Moreover, Patent Literature 3 describes a laminated body and a method for constructing said laminated body.

Patent Literature 4 discloses a laminated adhesive film for the use in insert molding.

Besides, Patent Literature 5 relates to ionomer laminates and articles formed from ionomer laminates.

Patent Literature 1: Japanese Unexamined Patent Application Publication No. 2014-168940
Patent Literature 2: Published Japanese Translation of PCT International Publication for Patent Application, No. 2007-507374
Patent Literature 3: WO 2013/161291 A1
Patent Literature 4: EP 2 636 523 A1
Patent Literature 5: WO 02/078954 A1

An object of the patent disclosure is to provide a multilayer film excellent in preform moldability, successfully and firmly adhering to an adherend to decorate, small in warpage during thermal lamination and satisfactory in coextrusion film formability and weather resistance, and provide a production method thereof. Another object of the patent disclosure is to provide a molded body obtained by stacking the multilayer film, and a method for producing the molded body.

According to the patent disclosure, the above objects can be achieved by providing the following [1] to [15].
[1] A multilayer film having a structure consisting of at least three layers:
   a polypropylene resin layer (X);
   an intermediate layer (Y) formed of a thermoplastic polymer composition containing 100 parts by mass of a thermoplastic elastomer (A), which is a block copolymer containing a polymer block (a1) formed of an aromatic vinyl compound unit and a polymer block (a2) formed of a conjugate diene compound unit, or a hydrogenated product thereof, and 1 to 50 parts by mass of a polypropylene resin (B); and
   a decorative layer (Z),
   wherein the layers (X), (Y), and (Z) are stacked in this order;
   wherein a content of a tackifier resin in the thermoplastic polymer composition is less than 1 mass%, and
   wherein an MFR ratio (Y)/(X) of the intermediate layer (Y) to the polypropylene resin layer (X) is 3 to 10 at a temperature of 230°C and a load of 2.16 kg (21.2N);
[2] The multilayer film according to [1], wherein the conjugate diene compound constituting the polymer block (a2) in the thermoplastic elastomer (A) is butadiene and/or isoprene and the total of the amount of 1,2-bond and the amount of 3,4-bond in the polymer block (a2) is 35 to 98 mol%;
[3] The multilayer film according to [1] or [2], wherein a content of the thermoplastic elastomer (A) in the thermoplastic polymer composition is 50 mass% or more;
[4] The multilayer film according to any one of [1] to [3], wherein the polypropylene resin (B) is a polar group-containing polypropylene resin (B1);
[5] The multilayer film according to any one of [1] to [4], wherein the polypropylene resin to be used in the polypropylene resin layer (X) has a melt flow rate (MFR) of 0.1 to 20 g/10 minutes, which is measured under conditions of a temperature 230°C and a load of 2.16 kg (21.2N);
[6] The multilayer film according to any one of [1] to [5], wherein the decorative layer (Z) at least has a layer formed of a resin film;
[7] The multilayer film according to [6], in which the resin film is formed of a (meth)acrylic resin;
[8] The multilayer film according to [7], wherein the (meth)acrylic resin contains a methacrylic resin (F) and an elastic body (R), the methacrylic resin (F) has a structural unit derived from methyl methacrylate in a proportion of 80 mass% or more and the content of the methacrylic resin (F) is 10 to 99 parts by mass and the content of the elastic body (R) is 90 to 1 part by mass relative to the total (100 parts by mass) of the methacrylic resin (F) and the elastic body (R);
[9] The multilayer film according to [8], wherein the elastic body (R) is an acrylic block copolymer (G), which has a methacrylate polymer block (g1) containing a structural unit derived from a methacrylate and an acrylate polymer block (g2) containing a structural unit derived from an acrylate and which contains the methacrylate polymer block (g1) in a proportion of 10 mass% to 70 mass%;
[10] The multilayer film according to [8], wherein the elastic body (R) is a multilayer structural body (E) having at least one layer structure, which has at least two layers of an inner layer (e2) and an outer layer (e1), which are arranged in this order in the direction of a center layer to an outermost layer, the outer layer (e1) contains 80 mass% or more of methyl methacrylate, and the inner layer (e2) contains 70 to 99.8 mass% of alkyl acrylate and 0.2 to 30 mass% of a crosslinkable monomer;
[11] The multilayer film according to any one of [1] to [10], wherein the thickness ratio (Y)/(X) of the intermediate layer (Y) to the polypropylene resin layer (X) is 0.4 to 1.5;
[12] A method for producing the multilayer film according to any one of [1] to[11], comprising: bonding the decorative layer (Z) to a laminate film having the polypropylene resin layer (X) and the intermediate layer (Y) by thermal lamination using two heating rollers;
[13] The method for producing the multilayer film according to [12], further comprising a step of obtaining a laminate film of the polypropylene resin layer (X) and the intermediate layer (Y) by a coextrusion molding method;
[14] A molded body having the multilayer film according to any one of [1] to [11] and a polyolefin resin (β), in which the polypropylene resin layer (X) in the multilayer film is stacked on the polyolefin resin (β); and
[15] A method for producing a molded body obtained by stacking the polypropylene resin layer (X) in the following multilayer film (α) on a polyolefin resin (β), comprising:
   a step (i) of placing the following multilayer film (α) in a cavity of an injection-molding die, which is formed by clamping a movable half and a cavity side part, such that the polypropylene resin layer (X) exposed surface faces a side to which a molten polyolefin resin (β) is to be injected and clamping the movable half and the cavity side part; and
   a step (ii) of injecting a molten polyolefin resin (β) into the cavity,
   wherein the multilayer film (α) has a structure consisting of at least three layers:
      a polypropylene resin layer (X);
      an intermediate layer (Y) formed of a thermoplastic polymer composition containing 100 parts by mass of a thermoplastic elastomer (A), which is a block copolymer containing a polymer block (a1) formed of an aromatic vinyl compound unit and a polymer block (a2) formed of a conjugate diene compound unit or a hydrogenated product thereof, and 1 to 50 parts by mass of a polypropylene resin (B); and
      a decorative layer (Z),
      wherein the layers (X), (Y), and (Z) are stacked in this order,
      wherein a content of a tackifier resin in the thermoplastic polymer composition is less than 1 mass%, and
      wherein an MFR ratio (Y)/(X) of the intermediate layer (Y) to the polypropylene resin layer (X) is 3 to 10 at a temperature of 230°C and a load of 2.16 kg (21.2N).

The multilayer film of the patent disclosure is excellent in preform moldability and successfully and firmly adhering to an adherend to decorate. In addition, the multilayer film is small in warpage during thermal lamination and satisfactory in coextrusion film formability and weather resistance. The molded body obtained by stacking the multilayer film of the patent disclosure, is excellent in industrial design. According to the production method of the present disclosure, it is possible to efficiently produce the multilayer film and the molded body.

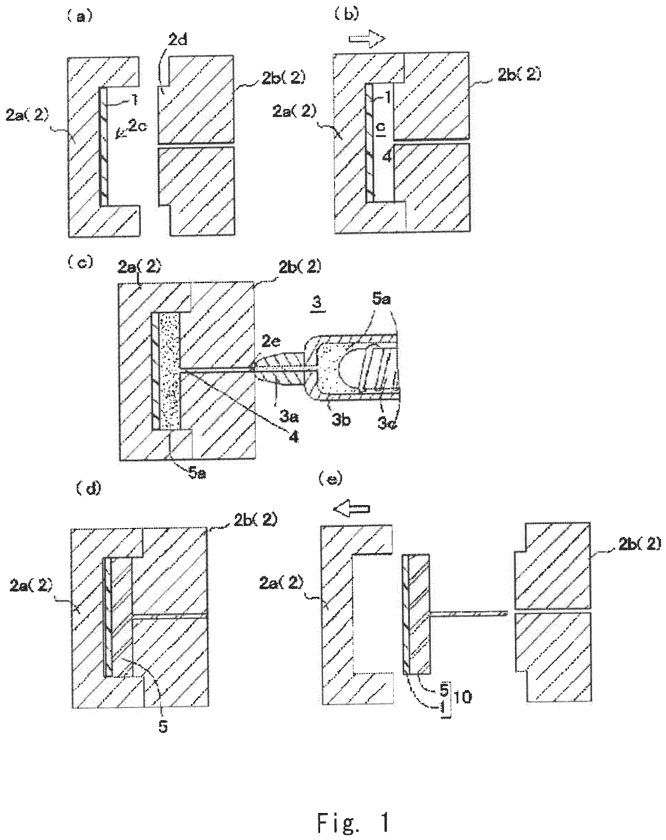

[Fig. 1] Figs. 1 (a) to (e) are illustrative drawings showing a production method for a molded body according to the present disclosure.

### [Multilayer film]

The multilayer film of the patent disclosure is a multilayer film having a structure consisting of at least three layers: a polypropylene resin layer (X), an intermediate layer (Y) formed of a thermoplastic polymer composition containing 100 parts by mass of a thermoplastic elastomer (A), which is a block copolymer containing a polymer block (a1) formed of an aromatic vinyl compound unit and a polymer block (a2) formed of a conjugate diene compound unit or a hydrogenated product thereof, and 1 to 50 parts by mass a polypropylene resin (B), and a decorative layer (Z), wherein the layers (X), (Y), and (Z) are stacked in this order, wherein a content of a tackifier resin in the thermoplastic polymer composition is less than 1 mass%, and wherein an MFR ratio (Y)/(X) of the intermediate layer (Y) to the polypropylene resin layer (X) is 3 to 10 at a temperature of 230°C and a load of 2.16 kg (21.2N). The individual layers will be sequentially described below.

### <Polypropylene resin layer (X)>

As the polypropylene resin to be used in the polypropylene resin layer (X), a known polypropylene resin can be used; however, a polypropylene resin having a content of a structural unit derived from propylene (hereinafter sometimes simply referred to as a propylene content) of 60 mol% or more is preferable. The content of the structural unit derived from propylene is preferably 80 mol% or more, more preferably 80 to 100 mol%, further preferably 90 to 100 mol% and particularly preferably 95 to 99 mol%. Examples of a structural unit derived from a monomer except propylene include structural units derived from an α-olefin such as 1-butene, 1-hexene, 1-heptene, 1-octene, 4-methyl-1-pentene, 1-nonene and 1-decene. Other than these units, e.g., a structural unit derived from a modifier (described later) may be mentioned.

Examples of the polypropylene resin used in the polypropylene resin layer (X) include a homo-polypropylene, a propylene-ethylene random copolymer, a propylene-ethylene block copolymer, a propylene-butene random copolymer, a propylene-ethylene-butene random copolymer, a propylene-pentene random copolymer, a propylene-hexene random copolymer, a propylene-octene random copolymer, a propylene-ethylene-pentene random copolymer, a propylene-ethylene-hexene random copolymer and modified polymers of these. Examples of the modified polymers include polymers obtained by graft copolymerization of a polypropylene resin with a modifier and polymers obtained by copolymerization of the main chain of a polypropylene resin with a modifier. Examples of the modifier include unsaturated dicarboxylic acids such as maleic acid, citraconic acid, halogenated maleic acid, itaconic acid, cis-4-cyclohexene-1,2-dicarboxylic acid and end-cis-bicyclo[2.2.1]-5-heptene-2,3-dicarboxylic acid; esters, amides or imides of unsaturated dicarboxylic acids; unsaturated dicarboxylic anhydrides such as maleic anhydride, citraconic anhydride, halogenated maleic anhydride, itaconic anhydride, anhydrous cis-4-cyclohexene-1,2-dicarboxylic acid and anhydrous end-cis-bicyclo[2.2.1]-5-heptene-2,3-dicarboxylic acid; unsaturated monocarboxylic acids such as acrylic acid, methacrylic acid and crotonic acid; and esters of unsaturated monocarboxylic acids (e.g., methyl acrylate, ethyl acrylate, methyl methacrylate and ethyl methacrylate) and an amide or imide thereof. As the polypropylene resin to be used in the polypropylene resin layer (X), an unmodified polypropylene resin is preferable.

Of them, for the reasons of being relatively inexpensive and easily available, a homo-polypropylene, a propylene-ethylene random copolymer and a propylene-ethylene block copolymer are preferable. Further, in view of adhesive force to the polyolefin resin (β) and reduction in warpage of multilayer film (α), a propylene-ethylene random copolymer is particularly preferable.

A single type of polypropylene resin may be used alone or two types or more of polypropylene resins may be used in combination. Also, the polypropylene resin layer (X) may contain another type of resin other than a polypropylene resin as mentioned above as long as the effect provided by the patent disclosure is not undermined.

The melt flow rate (MFR) of the polypropylene resin to be used in the polypropylene resin layer (X), which is measured under the conditions of a temperature of 230°C and a load of 2.16 kg (21.2N), is preferably 0.1 to 20 g/10 minutes, more preferably 0.3 to 15 g/10 minutes and further preferably 0.6 to 10 g/10 minutes in view of molding processability of the resin composition (X). Note that, "melt flow rates" described in the specification and the claims all are values obtained by measurement according to JIS K 7210.

The melting point of a polypropylene resin as mentioned above, although it is not particularly limited, falls within the range of preferably 120 to 180°C and more preferably 120 to 170°C.

The heat of fusion of the polypropylene resin to be used in the polypropylene resin layer (X) is preferably 400 to 800 mJ and more preferably 430 to 780 mJ, in view of warpage of the decorative layer (Z) during lamination and adhesion strength between the polypropylene resin layer (X) and the polyolefin resin (β).

### <Intermediate layer (Y)>

The thermoplastic polymer composition constituting the intermediate layer (Y) contains a thermoplastic elastomer (A), which is a block copolymer containing a polymer block (a1) formed of an aromatic vinyl compound unit and a polymer block (a2) formed of a conjugate diene compound unit, or a hydrogenated product thereof. The content of the thermoplastic elastomer (A) in the thermoplastic polymer composition is preferably 50 mass% or more and more preferably 65 mass% or more.

### [Thermoplastic elastomer (A)]

Examples of the aromatic vinyl compound constituting the polymer block (a1) formed of an aromatic vinyl compound unit contained in the thermoplastic elastomer (A) include styrene, α-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, 1-vinylnaphthalene and 2-vinylnaphthalene. The polymer block containing an aromatic vinyl compound unit may be constituted of a structural unit derived from one type of aromatic vinyl compound as mentioned above or two or more types thereof. Of them, styrene, α-methylstyrene and 4-methylstyrene are preferable.

The polymer block (a1) formed of an aromatic vinyl compound unit is a polymer block containing an aromatic vinyl compound unit in a proportion of preferably 80 mass% or more, more preferably 90 mass% or more and further preferably 95 mass% or more. The polymer block (a1) may contain a single aromatic vinyl compound unit, alone; however, the polymer block (a1) may contain another copolymerizable monomer unit in addition to the aforementioned aromatic vinyl compound unit as long as the effect provided by the patent disclosure is not undermined. Examples of the other copolymerizable monomer include 1 -butene, pentene, hexene, butadiene, isoprene and methyl vinyl ether. If the other copolymerizable monomer unit is present, the proportion thereof relative to the total (amount) of the aromatic vinyl compound unit and the other copolymerizable monomer unit is preferably 20 mass% or less, more preferably 10 mass% or less and further preferably 5 mass% or less.

Examples of the conjugate diene compound constituting the polymer block (a2) formed of a conjugate diene compound unit and contained in the thermoplastic elastomer (A) include butadiene, isoprene, 2,3-dimethyl-1,3-butadiene, 1,3-pentadiene and 1,3-hexadiene. Of them, butadiene and isoprene are preferable.

The polymer block (a2) containing a conjugate diene compound unit may be constituted of a structural unit derived from one type of a conjugate diene compound as mentioned above or two or more types thereof, particularly preferably constituted of a structural unit derived from butadiene or isoprene or structural units derived from butadiene and isoprene.

The polymer block (a2) formed of a conjugate diene compound unit is a polymer block containing a conjugate diene compound unit in a proportion of preferably 80 mass% or more, more preferably 90 mass% or more and further preferably 95 mass% or more. The polymer block (a2) may contain a single conjugate diene compound unit, alone however, the polymer block (a2) may contain another copolymerizable monomer unit in addition to the aforementioned conjugate diene compound unit as long as the monomer unit does not interrupt the present disclosure. Examples of the other copolymerizable monomer include styrene, α-methylstyrene and 4-methylstyrene. If the other copolymerizable monomer unit is present, the proportion thereof relative to the total (amount) of the conjugate diene compound unit and the other copolymerizable monomer unit is preferably 20 mass% or less, more preferably 10 mass% or less and further preferably 5 mass% or less.

The binding form of the conjugate diene constituting the polymer block (a2) is not particularly limited. For example, in the case of butadiene, 1,2-bond and 1,4-bond can be employed; whereas, in the case of isoprene, 1,2-bond, 3,4-bond and 1,4-bond can be employed. In particular, if a polymer block formed of a conjugate diene compound unit is formed of butadiene, formed of isoprene or formed of both butadiene and isoprene, the total amount of 1,2-bond and 3,4-bond in the polymer block formed of a conjugate diene compound unit is preferably 35 to 98 mol%, more preferably 40 to 90 mol% and further preferably 50 to 80 mol%.

Note that, the total amount of 1,2-bond and 3,4-bond can be calculated based on ¹H-NMR measurement. More specifically, the total amount can be calculated based on the ratio of the integral value of a peak present in 4.2 to 5.0 ppm derived from the 1,2-bond and 3,4-bond units and the integral value of a peak present in 5.0 to 5.45 ppm derived from the 1,4-bond unit.

The binding form of a polymer block (a1) formed of an aromatic vinyl compound unit to a polymer block (a2) formed of a conjugate diene compound unit in the thermoplastic elastomer (A) is not particularly limited and may be linear, branch, radial binding form or a combination of these (two or more); however, a linear binding form is preferable.

Examples of the linear binding form, provided that a polymer block (a1) is represented by a and a polymer block (a2) is represented by b, include a di-block copolymer represented by a-b, a tri-block copolymer represented by a-b-a or b-a-b, a tetra-block copolymer represented by a-b-a-b or a penta-block copolymer represented by a-b-a-b-a or b-a-b-a-b, (a-b)nX type copolymer (X represents a coupling residue, n represents an integer of 2 or more) and a mixture of these. Of them, a triblock copolymer is preferable and a triblock copolymer represented by a-b-a is more preferable.

The content of a polymer block (a1) formed of an aromatic vinyl compound unit in the thermoplastic elastomer (A) relative to the whole thermoplastic elastomer (A) is preferably 5 to 75 mass%, more preferably 5 to 60 mass% and further preferably 10 to 40 mass%, in view of flexibility and mechanical properties.

In the thermoplastic elastomer (A), it is preferable that a polymer block (a2) is partly or wholly hydrogenated in order to improve heat resistance and weather resistance (hereinafter sometimes referred to simply as "hydrogenated"). In this case, the hydrogenation rate is preferably 80% or more and more preferably 90% or more. The hydrogenation rate herein is a value obtained by measuring the iodine values of the block copolymer before and after the hydrogenation reaction.

The weight average molecular weight of the thermoplastic elastomer (A), in view of mechanical properties and molding processability, is preferably 30,000 to 500,000, more preferably 50,000 to 400,000, more preferably 60,000 to 200,000, further preferably 70,000 to 200,000, particularly preferably 70,000 to 190,000 and most preferably 80,000 to 180,000. The weight average molecular weight herein is the polystyrene-equivalent weight average molecular weight obtained by gel permeation chromatography (GPC).

As the thermoplastic elastomer (A), a single thermoplastic elastomer may be used alone or two types or more of thermoplastic elastomers may be used in combination.

As the method for producing a thermoplastic elastomer (A), although it is not particularly limited, for example, an anionic polymerization method can be mentioned. Examples thereof include (i) a method of sequentially polymerizing an aromatic vinyl compound as mentioned above, a conjugate diene compound as mentioned above and an aromatic vinyl compound as mentioned above, with an alkyl lithium compound used as an initiator; (ii) a method of sequentially polymerizing an aromatic vinyl compound as mentioned above and a conjugate diene compound as mentioned above with an alkyl lithium compound used as an initiator and then, adding a coupling agent and carrying out coupling; and (iii) a method of sequentially polymerizing a conjugate diene compound as mentioned above and an aromatic vinyl compound as mentioned above with a dilithium compound used as an initiator.

In the anionic polymerization, the amounts of 1,2-bond and 3,4-bond of the thermoplastic elastomer (A) can be increased by adding an organic Lewis base and can be easily controlled by the amount of the organic Lewis base to be added. Examples of the organic Lewis base include esters such as ethyl acetate; amines such as triethylamine, N,N,N',N'-tetramethylethylenediamine (TMEDA) and N-methyl morpholine; nitrogen-containing heterocyclic aromatic compounds such as pyridine; amides such as dimethylacetamide; ethers such as dimethyl ether, diethylether, tetrahydrofuran (THF) and dioxane; glycol ethers such as ethylene glycol dimethyl ether and diethylene glycol dimethyl ether; sulfoxides such as dimethylsulfoxide; and ketones such as acetone, methyl ethyl ketone.

Further, a hydrogenated product of a thermoplastic elastomer (A) can be produced by subjecting the unhydrogenated thermoplastic elastomer (A) obtained above to a hydrogenation reaction. The hydrogenation reaction can be performed by dissolving the unhydrogenated thermoplastic elastomer (A) obtained above in a solvent inactive to the reaction and a hydrogenation catalyst, or directly reacting an unhydrogenated thermoplastic elastomer (A) without isolating from the reaction solution with hydrogen in the presence of a hydrogenation catalyst.

As the thermoplastic elastomer (A), a commercially available product can be used.

### [Polypropylene resin (B)]

The thermoplastic polymer composition constituting the intermediate layer (Y) further contains a polypropylene resin (B). Due to the presence of the polypropylene resin (B), the thermoplastic polymer composition exhibits excellent film formability and the resultant multilayer film becomes excellent in coextrusion film formability.

As the polypropylene resin (B), a known polypropylene resin can be used; however, a polypropylene resin whose content of a structural unit derived from propylene is 60 mol% or more is preferable. The content of a structural unit derived from propylene is preferably 80 mol% or more, more preferably 80 to 100 mol%, further preferably 90 to 100 mol% and particularly preferably 95 to 99 mol%. Examples of the structural unit derived from a monomer except propylene include a structural unit derived from ethylene and a structural unit derived from an α-olefin such as 1-butene, 1-hexene, 1-heptene, 1-octene, 4-methyl-1-pentene, 1-nonene and 1-decene. Other than these, a structural unit derived from a modifier (described later) is also mentioned.

Examples of the polypropylene resin (B) include a homo-polypropylene, a propylene-ethylene random copolymer, a propylene-ethylene block copolymer, a propylene-butene random copolymer, a propylene-ethylene-butene random copolymer, a propylene-pentene random copolymer, a propylene-hexene random copolymer, a propylene-octene random copolymer, a propylene-ethylene-pentene random copolymer, a propylene-ethylene-hexene random copolymer and modified polymers of these. Examples of the modified polymers include a product obtained by graft copolymerization of a polypropylene resin with a modifier and a product obtained by copolymerization of the main chain of a polypropylene resin with a modifier.

Of these, a modified product, i.e., a polar group-containing polypropylene resin (B1), is preferable as the polypropylene resin (B). Owing to the use of the polar group-containing polypropylene resin (B1) as the polypropylene resin (B), not only excellent film formability is obtained but also the adhesive force of the thermoplastic polymer composition is improved; and the intermediate layer (Y) exhibits satisfactory adhesive performance even to a metal component to firmly bond the polypropylene resin layer (X) and the decorative layer (Z) and delamination can be prevented.

Examples of the polar group of the polar group-containing polypropylene resin (B1) include a (meth)acryloyloxy group; a hydroxyl group; an amide group; a halogen atom such as a chlorine atom; a carboxyl group; and an acid anhydride group. The method for producing the polar group-containing polypropylene resin (B1) is not particularly limited; however, the polar group-containing polypropylene resin (B1) can be obtained by subjecting propylene and a polar group-containing copolymerizable monomer serving as a modifier to a known random copolymerization, block copolymerization or graft copolymerization. Of these, random copolymerization and graft copolymerization are preferable and a graft copolymer is more preferable. Other than these methods, the polar group-containing polypropylene resin (B1) can be obtained in accordance with a known method by subjecting a polypropylene resin to, e.g., an oxidation or chlorination reaction.

Examples of the polar group-containing copolymerizable monomer include vinyl acetate, vinyl chloride, ethylene oxide, propylene oxide, acrylamide and unsaturated carboxylic acid or an ester or anhydride thereof. Of them, an unsaturated carboxylic acid or an ester or anhydride thereof is preferable. Examples of the unsaturated carboxylic acid or an ester or anhydride thereof include a (meth)acrylic acid, a (meth)acrylate, maleic acid, a maleic anhydride, fumaric acid, itaconic acid, an itaconic anhydride, himic acid and a himic anhydride. Of them, maleic acid and a maleic anhydride are more preferable. These polar group-containing copolymerizable monomers may be used alone or in combination (two types or more).

As the polar group-containing polypropylene resin (B1), in view of adhesiveness, a polypropylene containing a carboxyl group as a polar group, in other words, a carboxylic acid-modified polypropylene resin is preferable and a maleic acid-modified polypropylene resin and a maleic anhydride-modified polypropylene resin are more preferable.

The polar group present in the polar group-containing polypropylene resin (B1) may be subjected to post-processing after polymerization. More specifically, a (meth)acrylic acid group and a carboxyl group may be neutralized with a metal ion to obtain an ionomer or esterified with, e.g., methanol and ethanol. Alternatively, e.g., hydrolysis of vinyl acetate may be performed.

The ratio of the polar group-containing structural unit of the polar group-containing polypropylene resin (B1) to all structural units of the polar group-containing polypropylene resin (B1) is preferably 0.01 to 20 mass%. If the ratio is 0.01 mass% or more, adhesiveness is improved. If the ratio of the polar group-containing structural unit is 20 mass% or less, the affinity to the thermoplastic elastomer (A) is improved; satisfactory mechanical properties are obtained; and generation of gel can be suppressed. From the same point of view, the ratio is preferably 0.01 to 7 mass%, more preferably 0.01 to 5 mass%, more preferably 0.1 to 3 mass% and further preferably 0.2 to 1 mass%. In order to contain the polar group-containing structural unit in an optimal ratio, a polypropylene resin containing a polar group-containing structural unit in a high concentration may be diluted with a polypropylene resin having no polar group-containing structural unit and put in use.

The thermoplastic polymer composition constituting the intermediate layer (Y) contains 1 to 50 parts by mass of polypropylene resin (B) relative to 100 parts by mass of the thermoplastic elastomer (A). If the ratio of polypropylene resin (B) is less than 1 part by mass, film formability of the intermediate layer (Y) deteriorates and coextrusion film formability of the resultant multilayer film sometimes deteriorates. In contrast, if the ratio of polypropylene resin (B) is more than 50 parts by mass, adhesive force of the decorative layer (Z) decreases and delamination may occur. In view of these points, the content of the polypropylene resin (B) relative to the thermoplastic elastomer (A) (100 parts by mass) is preferably 5 parts by mass or more and 45 parts by mass or less.

From the above, the content of the polypropylene resin (B) relative to the thermoplastic elastomer (A) (100 parts by mass) is preferably 5 to 45 parts by mass.

### [Optional components]

The thermoplastic polymer composition constituting the intermediate layer (Y), if needed, may contain another thermoplastic polymer, such as an olefinic polymer, a styrene polymer, a polyphenylene ether resin and a polyethylene glycol, as long as the effect of the present disclosure is not significantly undermined. Examples of the olefinic polymer include a block copolymer and random copolymer of polyethylene, polypropylene, polybutene or propylene with another type of α-olefin such as ethylene and 1-butene.

If the other thermoplastic polymer is added, the content thereof relative to the thermoplastic elastomer (A) (100 parts by mass) is preferably 100 parts by mass or less, more preferably 50 parts by mass or less, more preferably 20 parts by mass or less, further preferably 10 parts by mass or less and particularly preferably 5 parts by mass or less.

The thermoplastic polymer composition constituting the intermediate layer (Y), if needed, may contain, e.g., a tackifier resin, a softening agent, an antioxidant, a lubricant, a light stabilizer, a processing aid, a colorant such as a pigment and a dye, a flame retardant, an antistatic agent, a delustering agent, silicon oil, an anti-blocking agent, a UV absorber, a release agent, a blowing agent, an antimicrobial agent, a mildewproofing agent and a flavor, as long as the effect of the present disclosure is not undermined.

Examples of the tackifier resin include an aliphatic unsaturated hydrocarbon resin, an aliphatic saturated hydrocarbon resin, an alicyclic unsaturated hydrocarbon resin, an alicyclic saturated hydrocarbon resin, an aromatic hydrocarbon resin, a hydrogenated aromatic hydrocarbon resin, a rosin ester resin, a hydrogenated rosin ester resin, a terpene phenolic resin, a hydrogenated terpene phenolic resin, a terpene resin, a hydrogenated terpene resin, an aromatic hydrocarbon-modified terpene resin, a coumarone/indene resin, a phenol resin and a xylene resin.

As the softening agent, a softening agent generally used in rubbers and plastics can be used. Examples thereof include paraffinic, naphthenic and aromatic process oils; phthalic acid derivatives such as dioctyl phthalate and dibutyl phthalate; and white oil, mineral oil, an oligomer of ethylene and α-olefin, paraffin wax, liquid paraffin, polybutene, low molecular-weight polybutadiene and low molecular-weight polyisoprene. Of these, a process oil is preferable and paraffinic process oil is more preferable.

Examples of the antioxidant include hindered phenolic, phosphoric, lactonic and hydroxylic antioxidants. Of these, a hindered phenolic antioxidant is preferable.

According to the present invention, the content of a tackifier resin in the thermoplastic polymer composition is less than 1 mass% and preferably less than 0.5 mass%, in view of film formability, thermal stability and manufacturing cost.

A method for preparing the thermoplastic polymer composition constituting the intermediate layer (Y) is not particularly limited. The thermoplastic polymer composition may be prepared in any method as long as components can be homogenously mixed by the method, and usually, a melt-kneading method is used. The melt-kneading can be carried out by a melt-kneading machine such as a single-screw extruder, a twin-screw extruder, a kneader, a batch mixer, a roller and Banbury mixer. The thermoplastic polymer composition can be usually obtained by melt-kneading preferably performed at 170 to 270°C.

In the thermoplastic polymer composition thus obtained, a melt flow rate (MFR), which is measured in accordance with JIS K 7210 under conditions of a temperature of 230°C and a load of 2.16 kg (21.2N), falls within the range of preferably 1 to 50 g/10 minutes, more preferably 1 to 30 g/10 minutes and further preferably 1 to 20 g/10 minutes. If MFR falls within the range, satisfactory molding processability can be obtained and the intermediate layer (Y) can be easily produced.

The adhesive force of the thermoplastic polymer composition in a compression molding method is preferably 15 N/25 mm or more, more preferably 30 N/25 mm or more and further preferably 60 N/25 mm or more. The adhesive force herein is a value obtained by measurement according to JIS K 6854-2.

### <Decorative layer (Z)>

As the decorative layer (Z), e.g., a resin film, nonwoven fabric, artificial leather and natural leather can be used. Of them, a layer at least having a layer formed of a resin film is particularly preferable as the decorative layer (Z).

Examples of a resin constituting the resin film include a polystyrene resin, a polyvinyl chloride resin, an acrylonitrile styrene resin, an acrylonitrile butadiene styrene resin, a polycarbonate resin, a (meth)acrylic resin, a polyester resin such as polyethylene terephthalate (PET) and polybutylene terephthalate, a polyamide such as nylon 6, nylon 66, and polyamide elastomer, polyvinyl chloride, polyvinylidene chloride, polyvinyl alcohol, an ethylene-vinyl alcohol copolymer, polyacetal, polyvinylidene fluoride and polyurethane. Of them, a (meth)acrylic resin is preferable in view of transparency, weather resistance, surface glossiness and scratch resistance. As the (meth)acrylic resin, a (meth)acrylic resin containing a methacrylic resin (F) and an elastic body (R) is more preferable.

### [Methacrylic resin (F)]

The methacrylic resin (F) has a structural unit derived from methyl methacrylate in a proportion of preferably 80 mass% or more and more preferably 90 mass% or more. In other words, the methacrylic resin (F) has a structural unit derived from a monomer except methyl methacrylate in a proportion of preferably 20 mass% or less and more preferably 10 mass% or less and may be a polymer formed only of methyl methacrylate as a monomer.

Examples of the monomer except methyl methacrylate include acrylic esters such as methyl acrylate, ethyl acrylate, n-propyl acrylate, isopropyl acrylate, n-butyl acrylate, isobutyl acrylate, s-butyl acrylate, tert-butyl acrylate, amyl acrylate, isoamyl acrylate, n-hexyl acrylate, 2-ethylhexyl acrylate, pentadecyl acrylate, dodecyl acrylate, phenyl acrylate, benzyl acrylate, phenoxyethyl acrylate, 2-hydroxyethyl acrylate, 2-ethoxyethyl acrylate, glycidyl acrylate, allyl acrylate, cyclohexyl acrylate, norbornenyl acrylate and isobonyl acrylate; methacrylic acid esters except methyl methacrylate, such as ethyl methacrylate, n-propyl methacrylate, isopropyl methacrylate, n-butyl methacrylate isobutyl methacrylate, s-butyl methacrylate, tert-butyl methacrylate, amyl methacrylate, isoamyl methacrylate, n-hexyl methacrylate, 2-ethylhexyl methacrylate, pentadecyl methacrylate, dodecyl methacrylate, phenyl methacrylate, benzyl methacrylate, phenoxyethyl methacrylate, 2-hydroxyethyl methacrylate, 2-ethoxyethyl methacrylate, glycidyl methacrylate, allyl methacrylate, cyclohexyl methacrylate, norbornenyl methacrylate and isobonyl methacrylate; unsaturated carboxylic acids such as acrylic acid, methacrylic acid, maleic anhydride, maleic acid and itaconic acid; olefins such as ethylene, propylene, 1-butene, isobutylene and 1-octene; conjugate dienes such as butadiene, isoprene and myrcene; aromatic vinyl compounds such as styrene, α-methylstyrene, p-methylstyrene and m-methylstyrene; and acrylamide, methacrylamide, acrylonitrile, methacrylonitrile, vinyl acetate, vinyl pyridine, vinyl ketone, vinyl chloride, vinylidene chloride and vinylidene fluoride.

The tacticity of the methacrylic resin (F) is not particularly limited, and, for example, a methacrylic resin (F) having tacticity such as isotacticity, heterotacticity and syndiotacticity may be used.

The weight average molecular weight of the methacrylic resin (F) falls within the range of preferably 20,000 to 180,000 and more preferably 30,000 to 150,000. If the weight average molecular weight is less than 20,000, impact resistance and toughness tend to decrease; whereas, if the weight average molecular weight is more than 180,000, the fluidity of the methacrylic resin (F) decreases and molding processability tends to deteriorate.

A method for producing a methacrylic resin (F) is not particularly limited. The methacrylic resin (F) can be obtained by polymerizing a monomer (mixture) containing methyl methacrylate in a proportion of 80 mass% or more or copolymerizing with a monomer except methyl methacrylate. Alternatively, a commercially available methacrylic resin may be used as the methacrylic resin (F). Examples of the commercially available methacrylic resin include "Parapet H1000B" (MFR: 22 g/10 minutes (230°C, 37.3 N)), "Parapet GF" (MFR: 15 g/10 minutes (230°C, 37.3 N)), "Parapet EH" (MFR: 1.3 g/10 minutes (230°C, 37.3 N)), "Parapet HRL" (MFR: 2.0 g/10 minutes (230°C, 37.3 N)), "Parapet HRS" (MFR: 2.4 g/10 minutes (230°C, 37.3 N)) and "Parapet G" (MFR: 8.0 g/10 minutes (230°C, 37.3 N)) [all are trade names; manufactured by Kuraray Co., Ltd.].

### [Elastic body (R)]

As the elastic body (R), e.g., a butadiene rubber, a chloroprene rubber, a block copolymer and a multilayer structural body are mentioned. These may be used alone or in combination. Of these, a block copolymer or a multilayer structural body is preferable and an acrylic block copolymer (G) or a multilayer structural body (E) is more preferable, in view of transparency, impact resistance and dispersibility.

### [Acrylic block copolymer (G)]

The acrylic block copolymer (G) has a methacrylate polymer block (g1) and an acrylate polymer block (g2). Each of the methacrylate polymer block (g1) and acrylate polymer block (g2) may be contained singly or in plural in the block copolymer (G).

The methacrylate polymer block (g1) contains a structural unit derived from a methacrylate as a main structural unit. The ratio of the structural unit derived from a methacrylate in the methacrylate polymer block (g1) is preferably 80 mass% or more, more preferably 90 mass% or more, further preferably 95 mass% or more and particularly preferably 98 mass% or more, in view of extensibility and surface hardness.

Examples of the methacrylate include methyl methacrylate, ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate, 2-methoxyethyl methacrylate, glycidyl methacrylate and allyl methacrylate. These may be polymerized alone or in combination (two types or more). Of these, in view of transparency and heat resistance, an alkyl methacrylate such as methyl methacrylate, ethyl methacrylate, isopropyl methacrylate, n-butyl methacrylate, tert-butyl methacrylate, cyclohexyl methacrylate and isobornyl methacrylate is preferable and methyl methacrylate is more preferable.

The methacrylate polymer block (g1) may contain a structural unit derived from a monomer except a methacrylate and the ratio thereof is preferably 20 mass% or less, more preferably 10 mass% or less, further preferably 5 mass% or less and particularly preferably 2 mass% or less, in view of extensibility and surface hardness. Examples of the monomer except a methacrylate include an acrylate, an unsaturated carboxylic acid, an aromatic vinyl compound, an olefin, a conjugate diene, acrylonitrile, methacrylonitrile, acrylamide, methacrylamide, vinyl acetate, vinyl pyridine, vinyl ketone, vinyl chloride, vinylidene chloride and vinylidene fluoride. These may be used alone or in combination (two types or more).

The weight average molecular weight of the methacrylate polymer block (g1) falls within the range of preferably 5,000 to 150,000, more preferably 8,000 to 120,000 and further preferably 12,000 to 100,000. If the weight average molecular weight is less than 5,000, the elastic modulus is low and wrinkle tends to be developed when stretch-molding is performed at a high temperature; whereas if the weight average molecular weight is more than 150,000, breakage tends to occur during stretch-molding.

If the acrylic block copolymer (G) has a plurality of methacrylate polymer blocks (g1), the composition ratios of structural units constituting the individual methacrylate polymer blocks (g1) and the molecular weights thereof may be mutually the same or different.

The ratio of the methacrylate polymer block (g1) in the acrylic block copolymer (G) falls within the range of preferably 10 mass% to 70 mass% and more preferably 25 mass% to 60 mass%, in view of transparency, flexibility, molding processability and surface smoothness. If a plurality of methacrylate polymer blocks (g1) are contained in the acrylic block copolymer (G), the ratios mentioned above are all calculated based on the total mass of the methacrylate polymer blocks (g1).

The acrylate polymer block (g2) contains a structural unit derived from an acrylate as a main structural unit. The ratio of the structural unit derived from an acrylate in the acrylate polymer block (g2) is preferably 45 mass% or more, more preferably 50 mass% or more, further preferably 60 mass% or more and particularly preferably 90 mass% or more, in view of three-dimensional coatability/formability and extensibility.

Examples of the acrylate include methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, cyclohexyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate, 2-methoxyethyl acrylate, glycidyl acrylate and allyl acrylate. These may be polymerized alone or in combination (two or more).

The acrylate polymer block (g2) is preferably formed of an alkyl acrylate and an aromatic (meth)acrylate, in view of extensibility and transparency. Examples of the alkyl acrylate include methyl acrylate, ethyl acrylate, isopropyl acrylate, n-butyl acrylate, 2-ethylhexyl acrylate and dodecyl acrylate. Of these, n-butyl acrylate and 2-ethylhexy1 acrylate are preferable.

The aromatic (meth)acrylate means an aromatic acrylate or an aromatic methacrylate and is obtained by binding a compound having an aromatic ring to a (meth)acrylic acid via ester bond. Examples of the aromatic (meth)acrylate include phenyl acrylate, benzyl acrylate, phenoxyethyl acrylate, styryl acrylate, phenyl methacrylate, benzyl methacrylate, phenoxyethyl methacrylate and styryl methacrylate. Of them, phenyl methacrylate, benzyl methacrylate, phenoxyethyl methacrylate and benzyl acrylate are preferable, in view of transparency.

If the acrylate polymer block (g2) is formed of an alkyl acrylate and an aromatic (meth)acrylate, it is preferable, in view of transparency, that the acrylate polymer block (g2) contains a structural unit derived from an alkyl acrylate in a proportion of 50 to 90 mass% and a structural unit derived from an aromatic (meth)acrylate in a proportion of 50 to 10 mass%; and more preferable that the acrylate polymer block (g2) contains a structural unit derived from an alkyl acrylate in a proportion of 60 to 80 mass% and a structural unit derived from an aromatic (meth)acrylate in a proportion of 40 to 20 mass%.

The acrylate polymer block (g2) may contain a structural unit derived from a monomer except an acrylate and the content thereof in the acrylate polymer block (g2) is preferably 55 mass% or less, more preferably 50 mass% or less, further preferably 40 mass% or less and particularly preferably 10 mass% or less. Examples of the monomer except an acrylate include a methacrylate, an unsaturated carboxylic acid, an aromatic vinyl compound, an olefin, a conjugate diene, acrylonitrile, methacrylonitrile, acrylamide, methacrylamide, vinyl acetate, vinyl pyridine, vinyl ketone, vinyl chloride, vinylidene chloride and vinylidene fluoride. These may be used alone or in combination (two types or more).

The weight average molecular weight of the acrylate polymer block (g2) falls within the range of preferably 5,000 to 120,000, more preferably 15,000 to 110,000 and further preferably 30,000 to 100,000.

If the block copolymer (G) has a plurality of acrylate polymer blocks (g2), the composition ratios of structural units constituting the individual acrylate polymer blocks (g2) and the molecular weights thereof may be mutually the same or different.

Note that, the weight average molecular weight of the methacrylate polymer block (g1) and the weight average molecular weight of acrylate polymer block (g2) are values calculated from the weight average molecular weights of an intermediate product and the final product (the block copolymer (G)) sampled in a process of producing the block copolymer (G), during and after polymerization. Individual weight average molecular weights are standard polystyrene equivalent values obtained by GPC measurement.

The ratio of the acrylate polymer block (g2) in the acrylic block copolymer (G) falls within the range of preferably 30 to 90 mass% and more preferably 40 to 75 mass%, in view of transparency, flexibility, molding processability and surface smoothness. If a plurality of acrylate polymer blocks (g2) are contained in the acrylic block copolymer (G), the ratios mentioned above are all calculated based on the total mass of the acrylate polymer blocks (g2).

The binding form of the methacrylate polymer block (g1) and the acrylate polymer block (g2) in the acrylic block copolymer (G) is not particularly limited. Examples thereof include structures where the methacrylate polymer block (g1) and the acrylate polymer block (g2) are connected in series, such as a structure ((g1)-(g2) structure) where one end of the acrylate polymer block (g2) is connected to one end of the methacrylate polymer block (g1); a structure ((g2)-(gl)-(g2) structure) where respective single ends of two acrylate polymer blocks (g2) are connected to two ends of the methacrylate polymer block (gl); and a structure ((gl)-(g2)-(gl) structure) where respective single ends of two methacrylate polymer blocks (g1) are connected to two ends of the acrylate polymer block (g2). Furthermore, a star block copolymer having a radial structure ([(g1)-(g2)-]nX structure and [(g2)-(g1)-]nX structure) where a plurality of block copolymers having a (g1)-(g2) structure are connected at one end, a radial structure ([(g1)-(g2)-(gl)-]nX structure) where a plurality of block copolymers having a (g1)-(g2)-(g1) structure are connected at one end, or a radial structure ([(g2)-(g1)-(g2)-]nX structure) where a plurality of block copolymers having a (g2)-(gl)-(g2) structure are connected at one end; and a block copolymer having a branched structure are mentioned. Note that, X herein represents a residue of a coupling agent. Of these, in view of surface smoothness and impact resistance, a diblock copolymer, a triblock copolymer and a star block copolymer are preferable; a diblock copolymer having a (gl)-(g2)structure, a triblock copolymer having a (gl)-(g2)-(gl) structure, a star block copolymer having a [(g1)-(g2)-]nX structure and a star block copolymer having a [(g1)-(g2)-(g1)-]nX structure are more preferable; and a triblock copolymer having a (g1)-(g2)-(g1) structure is further preferable.

The acrylic block copolymer (G) may have a polymer block (g3) other than the methacrylate polymer block (g1) and acrylate polymer block (g2). The main structural unit constituting the polymer block (g3) is a structural unit derived from a monomer except a methacrylate and an acrylate. Examples of the monomer include olefins such as ethylene, propylene, 1-butene, isobutylene and 1-octene; conjugate dienes such as butadiene, isoprene and myrcene; aromatic vinyl compounds such as styrene, α-methylstyrene, p-methylstyrene and m-methylstyrene; and vinyl acetate, vinyl pyridine, acrylonitrile, methacrylonitrile, vinyl ketone, vinyl chloride, vinylidene chloride, vinylidene fluoride, acrylamide, methacrylamide, ε-caprolactone and valerolactone.

The acrylic block copolymer (G) may have a functional group such as a hydroxyl group, a carboxyl group, an acid anhydride group and an amino group in the molecular chain or at the end thereof.

The weight average molecular weight of the acrylic block copolymer (G) falls within the range of preferably 60,000 to 400,000 and more preferably 60,000 to 200,000. If the weight average molecular weight of the acrylic block copolymer (G) is less than 60,000, a sufficient melt tension cannot be maintained in melt extrusion molding, a satisfactory film is rarely obtained and mechanical properties of the resultant film such as breaking strength tend to decrease. In contrast, if the weight average molecular weight is more than 400,000, the viscosity of molten resin increases, the surface of the film obtained by melt extrusion molding will have fine wrinkle-like concavo-convex feature and bumps due to unmolten matter (high molecular weight substance), with the result that a satisfactory film tends to be rarely obtained.

The molecular weight distribution of the acrylic block copolymer (G) falls within the range of preferably 1.0 to 2.0 and more preferably 1.0 to 1.6. If the molecular weight distribution falls within the above range, the content of unmolten matter, i.e., a cause of bumps, in the decorative layer can be reduced. Note that, the weight average molecular weight and number average molecular weight are standard polystyrene equivalent molecular weights obtained by GPC measurement.

The refractive index of the acrylic block copolymer (G) falls within the range of preferably 1.485 to 1.495 and more preferably 1.487 to 1.493. If the refractive index falls within the range, the transparency of the resultant substrate layer increases. Note that, the refractive index is a value measured at a wavelength of 587.6 nm (d line).

The method for producing the acrylic block copolymer (G) is not particularly limited, a method according to a known method can be employed, for example, a method for subjecting monomers constituting individual polymer blocks to living polymerization is usually used. Examples of the living polymerization method include an anionic polymerization method using an organic alkali metal compound as a polymerization initiator and performed in the presence of a mineral acid salt such as an alkali metal or an alkaline earth metal salt; an anionic polymerization method using an organic alkali metal compound as a polymerization initiator and performed in the presence of an organoaluminum compound; a polymerization method using an organic rare earth metal complex as a polymerization initiator; and a radical polymerization method using α-halogenated ester compound as an initiator and performed in the presence of a copper compound. Furthermore, a method of producing an acrylic block copolymer (G) as a mixture containing it by polymerizing monomers constituting individual blocks by using a multivalent radical polymerization initiator and a multivalent radical chain transfer agent is also mentioned. Of these methods, the anionic polymerization method using an organic alkali metal compound as a polymerization initiator and performed in the presence of an organoaluminum compound is preferable since the acrylic block copolymer (G) can be obtained with high purity; the molecular weight and composition ratio are easily controlled; and the method is economically favorable.

### [Multilayer structural body (E)]

The multilayer structural body (E) has at least one layer structure, which has at least two layers of an inner layer (e2) and an outer layer (e1), which are arranged in this order in the direction of a center layer to an outermost layer. The multilayer structural body (E) may further have a crosslinkable resin layer (e3) inside the inner layer (e2) or outside the outer layer (e1).

The inner layer (e2) is a layer constituted of a crosslinked elastic body obtained by copolyermization of a monomer mixture having an alkyl acrylate and a crosslinkable monomer.

As the alkyl acrylate, an alkyl acrylate having an alkyl group having 2 to 8 carbon atoms is preferably used and, e.g., butyl acrylate and 2-ethylhexyl acrylate are mentioned. The ratio of the alkyl acrylate in the whole monomer mixture for forming the copolymer of the inner layer (e2) falls within the range of preferably 70 to 99.8 mass% and more preferably 80 to 90 mass%, in view of impact resistance.

As the crosslinkable monomer for use in the inner layer (e2), a crosslinkable monomer having at least two polymerizable carbon-carbon double bonds within one molecule is satisfactory. Examples thereof include unsaturated carboxylic acid diesters of glycols such as ethylene glycol dimethacrylate and butanediol dimethacrylate; alkenyl esters of unsaturated carboxylic acids such as allyl acrylate, allyl methacrylate and allyl cinnamate; polyalkenyl esters of polybasic acids such as diallyl phthalate, diallyl maleate, triallyl cyanurate and triallyl isocyanurate; unsaturated carboxylic acid esters of polyhydric alcohols such as trimethylolpropane triacrylate; and divinylbenzene. An alkenyl ester of an unsaturated carboxylic acid and a polyalkenyl ester of a polybasic acid are preferable. The amount of the crosslinkable monomer in the whole monomer mixture falls within the range of preferably 0.2 to 30 mass% and more preferably 0.2 to 10 mass% in order to improve the impact resistance, heat resistance and surface hardness of the substrate layer.

The monomer mixture for use in forming the inner layer (e2) may further has another monofunctional monomer. Examples of the monofunctional monomer include alkyl methacrylates such as methyl methacrylate, ethyl methacrylate, n-propyl methacrylate, isopropyl methacrylate, n-butyl methacrylate, isobutyl methacrylate, pentyl methacrylate, hexyl methacrylate, octyl methacrylate, 2-ethylhexyl methacrylate, cyclohexyl methacrylate, dodecyl methacrylate, myristyl methacrylate, palmityl methacrylate, stearyl methacrylate and behenyl methacrylate; esters of methacrylic acid and a phenol such as phenyl methacrylate; esters of methacrylic acid and an aromatic alcohol such as benzyl methacrylate; aromatic vinyl monomers such as styrene, α-methylstyrene, 1-vinylnaphthalene, 3-methylstyrene, 4-propylstyrene, 4-cyclohexylstyrene, 4-dodecylstyrene, 2-ethyl-4-benzylstyrene, 4-(phenylbutyl)styrene and halogenated styrene; vinyl cyanide monomers such as acrylonitrile and methacrylonitrile; and conjugate diene monomers such as butadiene and isoprene. The amount of the other monofunctional monomer in the whole monomer mixture is preferably 24.5 mass% or less and more preferably 20 mass% or less in order to improve the impact resistance of the substrate layer.

The outer layer (e1) is constituted of a rigid thermoplastic resin obtained by polymerization of a monomer mixture containing methyl methacrylate in a proportion of 80 mass% or more and preferably 90 mass% or more, in view of heat resistance of the substrate layer. The rigid thermoplastic resin contains another monofunctional monomer in a proportion of 20 mass% or less and preferably 10 mass% or less.

Examples of the other monofunctional monomer include alkyl acrylates such as methyl acrylate, butyl acrylate and 2-ethylhexyl acrylate; acrylic acid; and methacrylic acid.

The content ratios of the inner layer (e2) and the outer layer (e1) in the multilayer structural body (E), in view of impact resistance, heat resistance, surface hardness and handling property of the resultant substrate layer and easiness of melt-kneading with the methacrylic resin (F) are as follows: the content ratio of the inner layer (e2) is preferably selected from the range of 40 to 80 mass% based on the mass of the multilayer structural body (E) (for example, the total amount of the inner layer (e2) and outer layer (e1) if the struct is formed of the two layers); whereas the content ratio of the outer layer (e1) is preferably selected from the range of 20 to 60 mass%.

A method for producing the multilayer structural body (E) is not particularly limited; however, the multilayer structural body (E) is preferable produced by emulsion polymerization, in view of control of the layer structure of the struct (E).

If a (meth)acrylic resin constituting the decorative layer (Z) contains a methacrylic resin (F) and the elastic body (R), the contents of individual components relative to the total of the methacrylic resin (F) and elastic body (R)(100 parts by mass) are preferably as follows: the content of the methacrylic resin (F) is preferably 10 to 99 parts by mass and the content of the elastic body (R) is preferably 90 to 1 part by mass. If the content of the methacrylic resin (F) is less than 10 parts by mass, the surface hardness of the decorative layer (Z) tends to decrease. It is more preferable that the content of the methacrylic resin (F) is 55 to 90 parts by mass and the content of the elastic body (R) is 45 to 10 parts by mass relative to the total of the methacrylic resin (F) and the elastic body (R)(100 parts by mass). It is further preferable that the content of methacrylic resin (F) is 70 to 90 parts by mass and the content of the elastic body (R) is 30 to 10 parts by mass.

The (meth)acrylic resin may contain various additives such as an antioxidant, a heat stabilizer, a lubricant, a processing aid, an antistatic agent, a thermal degradation inhibitor, a UV absorber, a light stabilizer, a polymer processing aid, a colorant and an impact aid.

The resin film may be formed of a mixture of the (meth)acrylic resin and another polymer. Examples of the other polymer include polyolefin resins such as polyethylene, polypropylene (PP), polybutene-1, poly-4-methylpentene-1 and polynorbornene; ethylene-based ionomers; styrene resins such as polystyrene, a styrene-maleic anhydride copolymer, a high impact polystyrene, an acrylonitrile-styrene copolymer, an acrylonitrile-butadiene-styrene copolymer (ABS), an acrylonitrile-ethylene-styrene copolymer, an acrylonitrile-acrylic ester-styrene copolymer, an acrylonitrile-chlorinated polyethylene-styrene copolymer and a methyl methacrylate-butadiene-styrene copolymer; a methyl methacrylate-styrene copolymer; polyester resins such as polyethylene terephthalate (PET) and polybutylene terephthalate; olyamides such as nylon 6, nylon 66 and a polyamide elastomer; polycarbonate, polyvinyl chloride, polyvinylidene chloride, polyvinyl alcohol, an ethylene-vinyl alcohol copolymer, polyacetal, polyvinylidene fluoride, polyurethane, modified polyphenylene ether, polyphenylene sulfide, silicone modified resin; acrylic rubber, silicone rubber; a styrene thermoplastic elastomer such as a styrene-ethylene/propylene-styrene copolymer, a styrene-ethylene/butadiene-styrene copolymer and a styrene-isoprene-styrene copolymer; and an olefinic rubber such as isoprene rubber, ethylene propylene rubber and ethylene propylene diene rubber.

A method for preparing a resin serving as a starting material for the resin film is not particularly limited and the resin may be prepared by any method as long as components as mentioned above can be homogeneously mixed by the method; however, a method of melting and kneading the components to mix them is preferable. In a mixing operation, a known mixing or kneading apparatus, such as a kneading extruder, an extruder, a mixing roller and Banbury mixer, can be used, and preferably a twin-screw extruder is used in order to improve kneading behavior and compatibility. The temperature at the time of the mixing/kneading may be appropriately controlled depending on, e.g., the melting temperature of the resin to be used and usually falls within the range of 110 to 300°C. If the melt-kneading is performed by a twin-screw extruder, it is preferable that melt-kneading is carried out with the use of a vent in order to prevent coloration, under reduced pressure and/or a nitrogen atmosphere. Note that, a method for forming a film will be described later.

The decorative layer (Z) may be colored. Examples of a coloring method include, but are not particularly limited to, a method of coloring a resin itself before subjected to film formation by adding a pigment or a dye to the resin constituting a resin film; and a method of staining a resin film by soaking the film in a liquid having a dye dispersed therein.

The decorative layer (Z) may have something printed. Patterns such as pictures, characters and figures, and colors are provided by printing. The patterns may be chromatic and achromatic. It is preferable that printing is made on the side of the decorative layer (Z) to be in contact with the intermediate layer (Y) to avoid color fading of the printed layer.

Onto the decorative layer (Z), vapor deposition may be applied. For example, metal tone and gloss are provided by vapor deposition of indium. It is preferable that the vapor deposition is applied onto the side of the decorative layer (Z) to be in contact with the intermediate layer (Y).

If a (meth)acrylic resin film is used as the decorative layer (Z), the surface of the film is preferably as hard as HB or more in terms of JIS pencil hardness (thickness 75 µm), more preferably F or more and further preferably H or more. If the (meth)acrylic resin film having a hard surface is used as the decorative layer (Z), the film rarely scratched is obtained. Because of this, the (meth)acrylic resin film is suitably used as a decorative and protective film for the surface of a molded article to be provided with design.

### <Method for producing multilayer film>

The multilayer film of the patent disclosure may be produced by any method as long as the multilayer film has a polypropylene resin layer (X), an intermediate layer (Y) and a decorative layer (Z) and is produced by stacking the layers (X), (Y) and (Z) in this order. Now, an example of the production method will be more specifically described below.

First, a resin film serving as the decorative layer (Z) is produced. Description herein will be made by taking a (meth)acrylic resin film as an example and the same applies to other resin films. A (meth)acrylic resin film can be produced by a known method such as a T-die method, an inflation method, a melt-casting method and a calendar method. To successfully obtain a film having satisfactory surface smoothness and low haze, it is preferable to employ a method including a step of extruding a molten/kneaded matter of a (meth)acrylic resin from a T-die in a molten state and molding the molten/kneaded matter by allowing both surfaces of the matter in contact with the surfaces of mirror-surface rollers or mirror-surface belts. Both the rollers or belts used herein are preferably made of a metal.

In the case of the method using a T-die, e.g., a melt-extruding machine (extruder) equipped with a single or twin extrusion screws can be used. The melt-extrusion temperature for producing the film of the patent disclosure is preferably 200 to 300°C and more preferably 220 to 270°C. If melt extrusion is performed by the melt-extruding machine, it is preferable that melt-extrusion is carried out with the use of a vent in order to prevent coloration, under reduced pressure and/or a nitrogen atmosphere.

To successfully obtain a film having satisfactory surface smoothness, satisfactory surface gloss and low haze, it is preferable that the surface temperature of at least one of mirror-surface rollers or mirror-surface belts sandwiching the film is set to be 60°C or more and the surface temperature of both mirror-surface rollers or mirror-surface belts sandwiching the film is set to be 130°C or less.

It is preferable that the thickness of the (meth)acrylic resin film is 500 µm or less. If the thickness is more than 500 µm, laminating property, handling property and secondary processability such as cutability and punching property deteriorate, with the result that use as a film becomes difficult; at the same time, the (unit) price per unit area increases. Due to such economical disadvantages, the thickness of more than 500 µm is unfavorable. The thickness of the film is more preferably 40 to 300 µm and particularly preferably 50 to 250 µm.

To the (meth)acrylic resin film, a stretching process may be applied. The mechanical strength increases by the stretching process, with the result that a crack resistant film can be obtained. Examples of a stretching method include, but are not particularly limited to, a simultaneous biaxial stretching method, a sequential biaxial stretching method, a tubular stretching method and a rolling method.

Separately from the above decorative layer, a laminate film constituted of the polypropylene resin layer (X) and the intermediate layer (Y) is produced. Examples of the lamination method that can be mentioned include a solution application method, in which a solution for the intermediate layer (Y) diluted with a solvent is applied to the polypropylene resin layer (X); a hot-melt application method, in which a melt of the intermediate layer (Y) is applied to the polypropylene resin layer (X); and a coextrusion molding method in which melts of the polypropylene resin layer (X) and the intermediate layer (Y) are stacked within a die. The coextrusion molding method can be carried out by a known method such as a T-die method and an inflation method. Examples of the T-die method that can be mentioned include a multi-manifold method and a feed block method. Particularly, in view of thickness accuracy, coextrusion according to the multi-manifold method is preferable. To successfully obtain a film having satisfactory surface smoothness after coextrusion, it is preferable to employ a method including a step of extruding a molten/kneaded matter from a T-die in a molten state and molding the molten/kneaded matter by allowing both surfaces of the matter in contact with the surfaces of mirror-surface rollers or mirror-surface belts. Both the rollers or belts used herein are preferably made of a metal or a silicone rubber.

Subsequently, to the laminate film having the polypropylene resin layer (X) and the intermediate layer (Y), the decorative layer (Z) is bonded by thermal lamination using two heating rollers to obtain a multilayer film. The thermal lamination method is not particularly limited.

In view of film-winding stability at the time of coextrusion molding, according to the present invention, the MFR ratio (Y)/(X) of the polypropylene resin layer (X) and the intermediate layer (Y) at a temperature of 230°C and a load of 2.16 kg (21.2N) is 3 to 10. If the MFR ratio is less than 1, film thickness and width may be destabilized.

It is preferable that the thickness of the polypropylene resin layer (X) is 500 µm or less. If the thickness is more than 500 µm, laminating property, handling property and secondary processability such as cutability and punching property deteriorate, with the result that use as the multilayer film (α) becomes difficult; at the same time, the (unit) price per unit area increases. Due to such economical disadvantages, the thickness of more than 500 µm is unfavorable. The thickness of the polypropylene resin layer (X) is more preferably 50 to 300 µm and particularly preferably 100 to 250 µm.

It is preferable that the thickness of the intermediate layer (Y) is 500 µm or less. If the thickness is more than 500 µm, laminating property, handling property, and secondary processability such as cutability and punching property deteriorate, with the result that use as the multilayer film (α) becomes difficult; at the same time, the (unit) price per unit area increases. Due to such economical disadvantages, the thickness of more than 500 µm is unfavorable. The thickness of the intermediate layer (Y) is more preferably 30 to 200 µm, further preferably 50 to 200 µm, and particularly preferably 80 to 150 µm.

It is preferable that the thickness ratio (Y)/(X) of the intermediate layer (Y) to the polypropylene resin layer (X) is 0.4 to 1.5. If the thickness ratio (Y)/(X) falls within the range, the adhesion strength of the intermediate layer (Y) and the polypropylene resin layer (X) or the intermediate layer (Y) and the decorative layer (Z) is excellent and the handling property during a molding process is satisfactory.

It is preferable that the total thickness of the multilayer film is less than 1000 µm. If the thickness of the multilayer film is less than 1000 µm, coatability/formability of the film, i.e., a property of covering a surface of an article having a three-dimensional curved surface is satisfactory in producing a molded body (described later) and a molding process is easily carried out.

### [Molded body]

The molded body of the present disclosure is a molded body having a multilayer film of the present disclosure and a polyolefin resin (β) and characterized in that the polypropylene resin layer (X) in the multilayer film is stacked on the polyolefin resin (β). Hereinafter, the multilayer film of the patent disclosure will be referred to as a multilayer film (α). The molded body of the present disclosure has the decorative layer (Z) as the outermost layer of the multilayer film (α). Owing to this, the multilayer film (α) is excellent in industrial design such as surface smoothness, surface hardness and surface gloss.

### [Polyolefin resin (β)]

Examples of the polyolefin resin (β) of the present disclosure include a propylene homopolymer, an ethylene homopolymer, a block copolymer or random copolymer of propylene and ethylene having an ethylene content of 1 to 30 wt% and preferably 5 to 28 wt%, a block copolymer or random copolymer of propylene and/or ethylene and an α-olefin having an ethylene content of 1 to 30 wt% and preferably 5 to 28 wt%, an olefinic thermoplastic elastomer, and a mixture of these.

Examples of the α-olefin in the above copolymer include α-olefins having 20 or less carbon atoms, such as 1-butene, 1-pentene, 3-methyl-1-butene, 1-hexene, 3-methyl-1-pentene, 4-methyl-1-pentene, 1-heptene, 1-octene, 1-nonene, 1-decene, 1-dodecene, 1-tetradecene, 1-hexadecene, 1-octadecene, 1-eicoshen. These α-olefins may be used alone or in combination (two types or more). The copolymerization ratio of α-olefin in the above copolymer is usually 1 to 30 wt% and preferably 1 to 20 wt% in the copolymer.

It is preferable that the polyolefin resin (β) is a polypropylene resin. Example of the polypropylene resin that is preferably used include a homo-polypropylene, a propylene-ethylene random copolymer, a propylene-ethylene block copolymer, a propylene-butene random copolymer, a propylene-ethylene-butene random copolymer, a propylene-pentene random copolymer, a propylene-hexene random copolymer, a propylene-octene random copolymer, a propylene-ethylene-pentene random copolymer and a propylene-ethylene-hexene random copolymer.

The melt flow rate (MFR) of the above polyolefin resin (β) at a temperature of 230°C and a load of 2.16 kg (21.2N) is not particularly limited; however, in view of injection moldability, the MFR is preferably, for example, about 5 to 20 g/10 minutes.

### [Method for producing a molded body]

The method for producing the molded body of the present disclosure is not particularly limited as long as the polypropylene resin layer (X) within the multilayer film (α) is stacked on the polyolefin resin (β) by the method. For example, the multilayer film (α) is stacked on the surface of the polyolefin resin (β) and the laminate is subjected to vacuum forming, pressure forming or compression molding performed under heating to obtain a laminate of the patent disclosure.

A particularly preferable one of the methods for producing the molded body of the present disclosure is a method commonly called as a simultaneous injection molding/lamination method.

In the simultaneous injection molding/lamination method, the multilayer film (α) is inserted between male and female dies for injection molding, molten polyolefin resin (β) is injected to the surface of the polypropylene resin layer (X) of the film (α) placed in the die to form an injection molded body; at the same time, the multilayer film (α) is bonded to the molded body.

The method will be more specifically described with reference to the drawings.

In Fig. 1, reference number 1 represents a multilayer film (α); 2a a movable half having a cavity portion 2c; 2b a cavity side part having a core portion 2d; 2e a sprue bush; 3 a shot end of an injection molding machine; 3a a nozzle; 3b a cylinder; 3c an inline screw; 4 a gate; 5 an injection molded body (polyolefin resin (β)); 5a a molten resin of a polyolefin resin (β); and 10 a laminated molding. The movable half 2a and the cavity side part 2b make a pair and constitutes an injection-molding die 2. Note that, in the embodiment, the movable half 2a is a female die and the cavity side part 2b is a male die of the injection-molding die 2; and the cavity portion 2c and the core part 2d forms a cavity c.

In the method for producing the laminated molding of the embodiment, the multilayer film (α) 1 is inserted in the cavity portion 2c (concave) of the movable half 2a, as shown in Fig. 1 (a). At this time, the multilayer film (α) 1 is housed such that the polypropylene resin layer (X) exposed surface faces the molten resin to be injected. If the multilayer film (α) is housed in this manner, the surface layer of the polypropylene resin layer (X) melts by the heat of the polyolefin resin (β) injected and fuses to the resin (β). In this manner, the multilayer film (α) and the polyolefin resin (β) can be firmly bonded.

Note that, the multilayer film (α) 1 may be fixed to the cavity portion 2c in order to suppress a shift in location at the time of injection of the molten resin. Examples of a fixing means include bonding with a double-sided tape and vacuum suction onto the surface of the movable half; alternatively, a method of providing projections on the cavity portion 2c and then fitting the multilayer film (α) is employed.

The multilayer film (α) to be inserted into the die may be flat (not shaped) or a shaped film having concavo-convex surfaces obtained by preform-molding such as vacuum forming and pressure forming. The preform molding of the multilayer film (α) may be carried out by another molding machine or in the die of the injection molding machine to be used in simultaneous injection molding/lamination method. The latter method, i.e., a method in which a film is formed by preform molding and a molten resin is injected to one of the surfaces of the preformed film, is called an insert-molding method. Owing to the polypropylene resin layer (X) that the multilayer film (α) has, adhesion to the die at the time of preform molding can be prevented and handling property is improved. A protective film or the like for an adhesive intermediate layer (Y) is not needed.

Subsequently, as shown in Fig. 1 (b), the movable half 2a and the cavity side part 2b are clamped to form the cavity c. Then, as shown in Fig. 1 (c), the cavity c is filled with a predetermined amount of molten polyolefin resin (β) 5a supplied from a gate 4. To describe more specifically, the injection part 3 of the injection molding machine is allowed to proceed; a nozzle 3a is brought into contact with the sprue bush 2e formed on the cavity side part 2b; and then, the molten resin 5a melted in a cylinder 3b is injected by an inline screw 3c. In this manner, cavity c is filled with the molten resin 5a.

Other conditions of injection molding (resin temperature, mold temperature, holding pressure after injection, cooling time) are appropriately set depending on, e.g., the thermal characteristics and melt viscosity of the polyolefin resin (β) and the shape of a molded body.

The thickness of an injection molded body to be obtained is not particularly limited and appropriately selected depending on the use thereof. For example, if the molded body is used for cases such as mobile phones, mobile equipment and home appliances, the ranges of 0.3 to 2 mm and further 0.5 to 1.5 mm are selected as preferable ranges.

Then, as shown in Fig. 1 (d), in a cooling step, while keeping the state of the movable half 2a and the cavity side part 2b clamped, the injection molded body 5 integrated in the multilayer film (α) 1 in the cavity c is cooled for a predetermined time. Then, as shown in Fig. 1 (e), when the movable half 2a and the cavity side part 2b are released, the laminated molding 10, in which the injection molded body 5 (molded) and the multilayer film (α) 1 stacked on the injection molded body 5 are mutually integrated, more specifically, a molded body in which the multilayer film (α) of the present disclosure is stacked on the polyolefin resin (β), can be obtained. The molded body obtained is prepared into a final product shape by trimming unnecessary portions, more specifically, the edges of the multilayer film (α) and cutting away a sprue gate and runner.

### [Use]

The multilayer film of the patent disclosure and a molded body obtained by stacking the multilayer film on the polyolefin resin (β) can be applied to articles requiring industrial design. Examples thereof that are suitably used include signboard parts such as an advertising tower, a billboard stand, a side signboard, a transom signboard and a rooftop billboard; display parts such as a showcase, a partition plate and a store display; lighting components such as a fluorescent-lamp cover, a mood-lighting cover, a lamp shade, a light ceiling, a light wall and a chandelier; interior parts such as furniture, a pendant and a mirror; building parts such as a door, a dome, safety window glass, a partition, a staircase wainscot panel, a balcony wainscot panel and roof of a leisure building; transport machine related parts such as automotive interior exterior members including a bumper; electronic equipment parts such as a face plate for video sound equipment, a stereo cover, a vending machine, a mobile phone and a computer; an incubator, a ruler, a dial, a greenhouse, a large tank of water, a box water tank, a bathroom member, a watch panel, a bathtub, a sanitary (appliance), a desk mat, a playing part, a toy, wallpaper; marking film, decoration applications of various home appliances.

### Examples

The present disclosure will be more specifically described by way of Examples; however, the present disclosure is not limited to these Examples. Test samples in Examples and Comparative Examples were produced as described below and physical properties were measured or evaluated as described below. The results are collectively shown in the table.

Individual components used in Examples and Comparative Examples of the present disclosure are as follows.

### <Multilayer film >

### [Polypropylene resin layer (X)]

As a polypropylene resin layer (X), the followings were used.
polypropylene resin (X-1)
Polypropylene resin Novatec EG7FTB (polypropylene-ethylene random copolymer, melting point = 149°C, heat of fusion = 437 mJ, MFR = 1.5 g/10 minutes),
polypropylene resin (X-2)
Polypropylene resin Novatec EC9 (block polypropylene, melting point = 164°C, heat of fusion = 498 mJ, MFR = 0.9 g/10 minutes)
polypropylene resin (X-3)
Polypropylene resin Novatec EA9 (homo-polypropylene, melting point = 161°C, heat of fusion = 495 mJ, MFR = 0.8 g/10 minutes) polypropylene resin (X-4)
Polypropylene resin Novatec MA3 (homo-polypropylene, melting point = 166°C, heat of fusion = 780 mJ, MFR = 13 g/10 minutes)

The resins above are all manufactured by Japan Polypropylene Corporation. MFRs are values all measured under conditions of a temperature of 230°C and a load of 2.16 kg (21.2N).

### [Intermediate layer (Y)]

As the intermediate layer (Y), the followings were used.

The thermoplastic polymer composition obtained in the Production Example 1 was designated as (Y-1).

The thermoplastic polymer composition obtained in the Production Example 2 was designated as (Y-2).

The thermoplastic elastomer (A-1) obtained in the following Synthesis Example 1 was designated as (Y-3).

### [Decorative layer (Z)]

As the decorative layer (Z), the followings were used.

The (meth)acrylic resin obtained in Production Example 3 below was designated as (Z-1).

The(meth)acrylic resin obtained in Production Example 4 below was designated as (Z-2).

Polycarbonate resin (Iupilon ML-300 (manufactured by Mitsubishi Gas Chemical Company, Inc.) was designated as (Z-3).

### <Polyolefin resin (β)>

As the polyolefin resin (β), the following was used.
Polypropylene resin J708UG (block polypropylene) (manufactured by Prime Polymer Co., Ltd.)

Physical properties in Examples and Comparative Examples were measured and evaluated in accordance with the following methods.

### [Weight average molecular weight (Mw) and molecular weight distribution (Mw/Mn)]

Mw and Mn were obtained by gel permeation chromatography (GPC) as standard polystyrene equivalent molecular weights.
Apparatus: GPC apparatus "HLC-8020"
   manufactured by Tohso Corporation
Separation column: "TSKgel GMHXL", "G4000HXL" and "G5000HXL" manufactured by Tohso Corporation, were connected in series
Eluent: Tetrahydrofuran
Eluent flow rate: 1.0 ml/minute
Column temperature: 40°C
Detection method: Differential refractive index (RI)

### [Content of polymer block (a1) in thermoplastic elastomer (A) and amount of vinyl bonds (amounts of 1,2-bond and 3,4-bond) in polymer block (a2)]

These were obtained by ¹H-NMR measurement.
Apparatus: Nuclear magnetic resonance apparatus "Lambda-500" (manufactured by JEOL Ltd.)
Solvent: Deuterated chloroform

### [Melting point/heat of fusion]

The melting point and heat of fusion of each of the aforementioned polypropylene resins were measured by a differential scanning calorimeter (DSC30 manufactured by METTLER TLEDO) in a nitrogen atmosphere in accordance with the ascending heat method: 25 °C → 190 °C →25 °C → 190°C (rate: 10°C/min). Evaluation was repeated twice (2nd-Run) and the melting point was obtained by calculation based on endothermic peak temperature in a melting curve; and the heat of fusion was obtained by calculation based on endothermic peak area in the melting curve.

### [MFR]

MFRs of various resins were obtained by a method according to JIS K 7210 by a MFR measuring device (MELT INDEXER L244; manufactured by TAKARA) in the conditions of a measurement temperature: 230°C and measurement load: 2.16 kg (21.2N).

### [Handling property of multilayer film during preform molding]

In the vacuum chamber box of a vacuum-pressure molding machine (NGF0406 molding machine; manufactured by Fu-se Vacuum Forming), a multilayer film (length: 210 mm, side: 297 mm) was inserted such that the decorative layer (Z) was positioned on the opposite side to a convex-form die (length: 250 mm, side: 160 mm × height 25 mm) placed on a stage, and thereafter, the film was heated up to 110°C under vacuum and pressurized by setting the pressure in the chamber box to be 0.3 kPa. In this manner, Three dimension Overlay Method (TOM molding) was carried out to shape the multilayer film into a box. When the multilayer film had the polypropylene resin layer (X), a preform was successfully obtained and released from the die without problem. When the multilayer film had no polypropylene resin layer (X) and the intermediate layer (Y) was directly in contact with the die, the film adhered to the die and release from the die failed.
∘: Molding can be performed without problem
×: Problems were found in molding (wrinkle or defective in mold release found)

### [Coextrusion film formability of polypropylene resin layer (X)/intermediate layer]

In each of Examples and Comparative Examples, polypropylene resin pellets constituting the polypropylene resin layer (X) and resin pellets constituting the intermediate layer (Y) were separately input in hoppers of a single-screw extruder (VGM25-28EX; manufactured by G. M. ENGINEERING) and co-extruded by a multi-manifold die to obtain a two-layer film having a width of 300 mm and a thickness of 325 µm. At this time, coextrusion film formability was evaluated by visually observing the presence or absence of the thickness variation of the film and pulsation of edges.
∘: No problem in film appearance
Δ: No problem in film appearance but the winding speed during coextrusion was required to reduce
×: Problems were found in film appearance (thickness variation or pulsation found)

### [Amount of curvature during thermal lamination]

In the same manner as in the following section "evaluation of coextrusion film formability", a two-layer film having the polypropylene resin layer (X) and the intermediate layer (Y) was produced. Subsequently, a resin film constituting the decorative layer (Z) and the two-layer film obtained above were placed between heating rollers of 120°C and 40°C of a thermal lamination device (Type VAII-700; manufactured by Taisei Laminator Co., Ltd.) such that the resin film was placed near the intermediate layer (Y) and allowed to pass through the rollers to bond them by thermal lamination. At this time, the resin film constituting the decorative layer (Z) was placed near the roller of 120°C. The obtained multilayer film (length: 210 mm, side 297 mm) was placed on a surface plate and the separation distance of the film from the surface of the surface plate was measured at midpoints of four sides of each film. The average of measurement values was obtained and subjected to evaluation as an amount of curvature.

### [Bonding strength (to PMMA) of the thermoplastic polymer compositions (Y-1) or (Y-2)]

Pellets of the thermoplastic polymer compositions (Y-1) or (Y-2) and (meth)acrylic resin composition (Z-2) obtained in Production Example 4 (described later) were separately subjected to compression molding performed by a compression molding machine under conditions of a temperature of 200°C and a load of 50 kgf/cm² for 2 minutes to obtain sheets formed of the thermoplastic polymer compositions (Y-1) or (Y-2) and a sheet formed of the (meth)acrylic resin composition (Z-2). The sheets (150 × 150 mm) formed of the thermoplastic polymer compositions (Y-1) or (Y-2) (length: 150 mm, side: 150 mm × thickness: 0.5 mm), a polyimide film (Kapton film; manufactured by Du Pont-Toray Co., Ltd., length: 75 mm side: 150 mm × thickness 0.05 mm) and the sheet formed of the (meth)acrylic resin composition (Z-2) (length: 150 mm, side: 150 mm × thickness: 0.5 mm) were stacked in this order and the laminated sheet was placed in the center of a metallic spacer having an inside dimension: 150 mm × 150 mm and thickness: 0.8 mm. The laminated sheet and the metallic spacer were sandwiched by polytetrafluoroethylene sheets and further sandwiched by metal plates and subjected to compression molding performed by a compression molding machine at 130°C and a load of 50 kgf/cm² for 2 minutes to obtain a multilayer film formed of the thermoplastic polymer compositions (Y-1) or (Y-2) and the (meth)acrylic resin composition (Z-2).

The multilayer film was cut into pieces having a width of 25 mm and used as test pieces for measuring adhesion strength. The peeling strength between the thermoplastic polymer compositions (Y-1) or (Y-2) and the (meth)acrylic resin composition (Z-2) was measured in accordance with JIS K 6854-2 by a peel tester (AGS-X; manufactured by Shimadzu Corporation) under conditions of a peel angle of 90°, a tensile rate of 300 mm/minute and an ambient temperature of 23°C to obtain the adhesion strength values (to PMMA) of the thermoplastic polymer compositions (Y-1) or (Y-2).

### [Weather resistance of decorative layer (Z)]

Each of the films of a (meth)acrylic resin and a polycarbonate resin used in the decorative layer (Z) was subjected to an accelerated exposure test performed by a sunshine carbon arc weather meter (Type WEL-SUN-HCH; manufactured by Suga Test Instruments Co., Ltd) under conditions of a black panel temperature: 63°C, humidity: 42%, UV intensity (360 nm to 370 nm): 1.0 to 1.4 mW/cm², including shooting water, for 500 hours. The color of a test sample was measured before and after the test by a colorimeter (Type C-2000; manufactured by Hitachi, Ltd.) and difference (ΔE) in color was evaluated. As the color difference ΔE decreases, the weather resistance becomes more excellent.

### [Adhesion strength of multilayer film and polyolefin resin (β)]

The molded body obtained in each of Examples and Comparative Examples was immobilized with a strong adhesive tape (Hyper Joint H9004; manufactured by NITTO DENKO CORPORATION) onto a board of stainless steel (SUS) with the polyolefin resin (β) side faced down. The peeling strength between the polypropylene resin layer (X) of the multilayer film and an adherend, i.e., the polyolefin resin (β), was measured by a desktop precision universal tester (AGS-X; manufactured by Shimadzu Corporation) in accordance with JIS K 6854-2 under conditions of the peel angle: 90°, tensile rate: 300 mm/minute and ambient temperature: 23°C. The adhesion strength (N/25 mm) of the multilayer film to a molded body was evaluated.
∘∘: Material breakage found in polypropylene resin layer (X)
∘: Firmly adhered
×: Peel is observed

### <Synthesis Example 1> [Thermoplastic elastomer (A-1)]

A pressure tight container purged with nitrogen and dried was charged with cyclohexane (64 L) as a solvent, sec-butyl lithium (10 mass% cyclohexane solution)(0.20 L) as an initiator and tetrahydrofuran (0.3 L) as an organic Lewis base. After the temperature of the mixture was raised to 50°C, styrene (2.3 L) was added to the mixture and polymerization was carried out for 3 hours; subsequently isoprene (23 L) was added and polymerization was carried out for 4 hours; and further styrene (2.3 L) was added and polymerization was carried out for 3 hours. The reaction solution obtained was poured in methanol (80 L) and the solid substance precipitated was obtained by filtration, dried at 50°C for 20 hours to obtain a triblock copolymer consisting of polystyrene-polyisoprene-polystyrene. Subsequently, the triblock copolymer consisting of polystyrene-polyisoprene-polystyrene (10 kg) was dissolved in cyclohexane (200 L), palladium carbon (palladium content: 5 mass%) as a hydrogenation catalyst was added in a proportion of 5 mass% relative to the copolymer. A reaction was performed at a hydrogen pressure of 2 MPa under a temperature of 150°C for 10 hours. After allowed to cool and reduced in pressure, the reaction solution was filtered to remove palladium carbon. The filtrate was concentrated and dried under vacuum to obtain a hydrogenated material (hereinafter referred to as " thermoplastic elastomer (A-1)") of the triblock copolymer consisting of polystyrene-polyisoprene-polystyrene. The thermoplastic elastomer (A-1) thus obtained had a weight average molecular weight of 107,000, a styrene content of 21 mass%, a hydrogenation rate of 85% and a molecular weight distribution of 1.04. The total amount of 1,2-bond and 3,4-bond contained in the polyisoprene block was 60 mol%.

### <Synthesis Example 2> [Polar group-containing polypropylene resin (B-1)]

Polypropylene (Prime Polypro F327; manufactured by Prime Polymer Co., Ltd.)(42 kg), maleic anhydride (160 g) and 2,5-dimethyl-2,5-di(tert-butylperoxy)hexane (42 g) were melted and kneaded by a batch mixer at 180°C and a screw rotation speed of 40 rpm to obtain a polar group-containing polypropylene resin (B-1) obtained. The MFR of the polar group-containing polypropylene resin (B-1) at a temperature of 230°C and a load of 2.16 kg (21.2N) was 6 g/10 minutes; the maleic anhydride concentration thereof was 0.3% and the melting point thereof was 138°C. Note that, the maleic anhydride concentration is a value obtained by titration with a methanol solution of potassium hydroxide. The melting point is a value obtained from the endothermic peak of the differential scanning calorimetry curve obtained by raising temperature at a rate of 10°C/min.

### <Synthesis Example 3> [Methacrylic resin (F-1)]

To a monomer mixture of methyl methacrylate (95 parts by mass) and methyl acrylate (5 parts by mass), a polymerization initiator (2,2'-azobis(2-methylpropionitrile), a hydrogen abstraction rate: 1%, one-hour half-life temperature: 83°C)(0.1 part by mass) and a chain transfer agent (n-octyl mercaptan)(0.28 parts by mass) were added and dissolved to obtain a raw material liquid. Separately, in another container, ion exchanged water (100 parts by mass), sodium sulfate (0.03 parts by mass) and a suspension dispersant (0.45 parts by mass) were mixed to obtain a mixed solution. A pressure-resistant polymerization tank was charged with the mixed solution (420 parts by mass) and the raw material liquid (210 parts by mass) and a polymerization reaction was initiated by setting the temperature to be 70°C while stirring the reaction solution in a nitrogen atmosphere temperature. At three hours after initiation of the polymerization reaction, the temperature was raised to 90°C and the mixture was continuously stirred for one hour to obtain a solution having a beads-like copolymer dispersed therein. The copolymer dispersion solution obtained was washed with an appropriately amount of ion exchanged water and subjected to a bucket centrifuge to take out the beads-like copolymer, which was dried by a hot-air drier of 80°C for 12 hours. As a result, a beads-like methacrylic resin (F-1) having a weight average molecular weight Mw (F) of 30,000 and Tg of 128°C was obtained.

### <Synthesis Example 4> [Multilayer structural body (E-1)]

A reactor equipped with a stirrer, a thermometer, a nitrogen gas inlet tube, a monomer inlet tube and a reflux condenser, ion exchanged water (1050 parts by mass) was charged with sodium dioctylsulfosuccinate (0.5 parts by mass) and sodium carbonate (0.7 parts by mas). The reactor was sufficiently purged with nitrogen gas and the internal temperature thereof was set to be 80°C. To the reactor, potassium persulfate (0.25 parts by mass) was added and stirred for 5 minutes. Thereafter, a monomer mixture (245 parts by mass) containing methyl methacrylate, methyl acrylate and allyl methacrylate in a ratio of 94: 5.8: 0.2 (mass ratio) was continuously added dropwise over 50 minutes to the reactor. After completion of the dropwise addition, a polymerization reaction was performed for further 30 minutes.

Then, in the reactor, potassium peroxodisulfate (0.32 parts by mass) was added. After the mixture was stirred for 5 minutes, a monomer mixture (315 parts by mass) containing butyl acrylate (80.6 mass%), styrene (17.4 mass%) and allyl methacrylate (2 mass%) was continuously added dropwise over 60 minutes. After completion of the dropwise addition, a polymerization reaction was performed for further 30 minutes.

Subsequently, in the same reactor, potassium peroxodisulfate (0.14 parts by mass) was added. After the mixture was stirred for 5 minutes, a monomer mixture (140 parts by mass) containing methyl methacrylate and methyl acrylate in a mass ratio of 94: 6 was continuously added dropwise over 30 minutes. After completion of the dropwise addition, a polymerization reaction was performed for further 60 minutes to obtain a multilayer structural body (E-1).

### <Synthesis Example 5> [Acrylic block copolymer (G-1)]

In a reactor deaerated and purged with nitrogen, dry toluene (735 kg), a toluene solution (39.4 kg) containing hexamethyltriethylenetetramine (0.4 kg) and isobutylbis(2,6-di-tert-butyl-4-methylphenoxy)aluminum (20 mol), sec-butyl lithium (1.17 mol) and methyl methacrylate (35.0 kg) were added in this order at room temperature, and the mixture was allowed to react at room temperature for one hour. An aliquot of the reaction solution was taken as a sample and the weight average molecular weight of a polymer contained in reaction solution was measured, it was 40,000, which corresponds to the weight average molecular weight, Mw (g1-1), of the methyl methacrylate polymer block (g1-1).

Subsequently, the temperature of the reaction solution was set to be -25°C and a mixture of n-butyl acrylate (24.5 kg) and benzyl acrylate (10.5 kg) was added dropwise over 0.5 hours. An aliquot of the reaction solution was taken as a sample and the weight average molecular weight of a polymer contained in reaction solution was measured, it was 80,000. Since the weight average molecular weight, Mw (g1-1) of the methyl methacrylate polymer block (g1-1) was 40,000, the weight average molecular weight Mw (g2) of acrylate polymer block (g2) formed of a copolymer of n-butyl acrylate and benzyl acrylate was determined as 40,000.

Subsequently methyl methacrylate (35.0 kg) was added. The temperature of the resultant reaction solution was returned to room temperature and the reaction solution was stirred for 8 hours to form a second methacrylate polymer block (g1-2). Thereafter, methanol (4 kg) was added in the reaction solution to terminate polymerization, and thereafter, the reaction solution was poured in a large volume of methanol and the mixture was filtered. The filter cake was dried under conditions of 80°C and 1 torr (about 133 Pa) for 12 hours to isolate an acrylic block copolymer (G-1). Since the weight average molecular weight Mw (G) of the obtained acryl block copolymer (G-1) was 120,000, the weight average molecular weight Mw (g1-2) of a methyl methacrylate polymer block (g1-2) was determined as 40,000.

### <Production Example 1> [Thermoplastic polymer composition (Y-1)]

The thermoplastic elastomer (A-1) (80 parts by mass) obtained in Synthesis Example 1 and the polar group-containing polypropylene resin (B-1) (20 parts by mass) obtained in Synthesis Example 2 were melted and kneaded by a twin-screw extruder (TEM-28; manufactured by TOSHIBA MACHINE CO., LTD, the same applies in the following Production Examples) at 230°C, extruded in the form of a strand and cut to produce pellets of the thermoplastic polymer composition (Y-1). The MFR of the resin was 7.4 g/10 minutes.

### <Production Example 2> [Thermoplastic polymer composition (Y-2)]

The thermoplastic elastomer (A-1) (80 parts by mass) obtained in Synthesis Example 1 and a nonpolar polypropylene resin (B-2)(20 parts by mass) were melted and kneaded by a twin-screw extruder (TEM-28; manufactured by TOSHIBA MACHINE CO., LTD, the same applies in the following Production Examples) at 230°C, extruded in the form of a strand and cut to produce pellets of the thermoplastic polymer composition (Y-2). The MFR of the composition (resin) was 7.3 g/10 minutes. The nonpolar polypropylene resin (B-2) used herein was WFX4TA; manufactured by Japan Polypropylene Corporation (MFR at 230°C and a load of 2.16 kg (21.18N) is 7 g/10 minutes, melting point 124°C). The melting point is a value read from the endothermic peak of the differential scanning calorimetry curve obtained by raising the temperature at a rate of 10°C/minute.

### <Production Example 3> [(Meth)acrylic resin (Z-1)]

The methacrylic resin (F-1) (80 parts by mass) obtained in Synthesis Example 3 and the multilayer structural body (E-1)(20 parts by mass) obtained in Synthesis Example 4 were melted and kneaded by the twin-screw extruder at 230°C, extruded in the form of a strand and cut to produce pellets of the (meth)acrylic resin (Z-1) having a Tg of 129°C.

### <Production Example 4> [(Meth)acrylic resin (Z-2)]

The methacrylic resin (F-1) (80 parts by mass) obtained in Synthesis Example 3 and the acrylic block copolymer (G-1) (20 parts by mass) obtained in Synthesis Example 5 were melted and kneaded by the twin-screw extruder at 230°C, extruded in the form of a strand and cut to produce pellets of the (meth)acrylic resin (Z-2) having a Tg of 127°C.

### <Example 1>

The pellets of the thermoplastic polymer composition (Y-1) obtained in Production Example 1 and pellets of a polypropylene resin (X-1) were separately input in hoppers of a single-screw extruder (VGM25-28EX; manufactured by G. M. ENGINEERING) and coextruded by a multi-manifold die to obtain a two-layer film having a width of 300 mm and a thickness of 325 µm. The thickness of each of the layers was controlled by an extrusion flow rate to adjust the thickness of the thermoplastic polymer composition (Y-1) to be 100 µm and the thickness of the polypropylene resin (X-1) to be 225 µm.

Separately from this, using the pellets of the (meth)acrylic resin (Z-1) obtained in Production Example 3, a single-screw extruder and a T-die for single layer, a (meth)acrylic resin film (thickness 75 µm) was obtained.

Subsequently, the two-layer film and the (meth)acrylic resin film obtained above were heat-laminated to produce a multilayer film of a three-layer structure. The thermal lamination was performed by a thermal lamination device (Type VAII-700; manufactured by Taisei Laminator Co., Ltd.). The (meth)acrylic resin film constituting the decorative layer (Z) and the above two-layer film were placed between heating rollers of 120°C and 40°C such that the resin film was placed near the intermediate layer (Y) and allowed to pass through the rollers to mutually bond by thermal lamination. At this time, the (meth)acrylic resin film was placed near the roller of 120°C.

Subsequently, the multilayer film obtained above and the polyolefin resin (β) were used to form a molded body in which the multilayer film was stacked on the polyolefin resin by housing the multilayer film in the die of a direct-pressure hydraulic molding machine (M-100C-AS-DM; manufactured by Meiki Co., Ltd.) such that the polypropylene resin layer (X) exposed surface of the multilayer film faced the side to which molten polyolefin resin (β) was to be injected; clamping a movable half and a cavity side part; and injecting a molten polyolefin resin (β) at 230°C in the cavity.

Physical properties of the resultant multilayer film and the molded body obtained by stacking the multilayer film were evaluated. The results are shown in Table 1.

### <Example 2>

A multilayer film and a molded body were obtained in the same manner as in Example 1 except that a polypropylene resin (X-2) was used in place of the polypropylene resin (X-1) in Example 1. The results are shown in Table 1.

### <Example 3>

A multilayer film and a molded body were obtained in the same manner as in Example 1 except that a polypropylene resin (X-3) was used in place of the polypropylene resin (X-1) in Example 1. The results are shown in Table 1.

### <Example 4>

A multilayer film and a molded body were obtained in the same manner as in Example 1 except that a polypropylene resin (X-4) was used in place of the polypropylene resin (X-1) in Example 1. The results are shown in Table 1.

### <Example 5>

A multilayer film and a molded body were obtained in the same manner as in Example 1 except that a (meth)acrylic resin (Z-2) was used in place of the (meth)acrylic resin (Z-1) in Example 1. The results are shown in Table 1.

### <Example 6>

A multilayer film and a molded body were obtained in the same manner as in Example 1 except that a polycarbonate resin (Z-3) was used in place of the (meth)acrylic resin (Z-1) in Example 1. The results are shown in Table 1.

### <Comparative Example 1>

A multilayer film and a molded body were obtained in the same manner as in Example 1 except that a thermoplastic elastomer (Y-3) was used in place of the thermoplastic polymer composition (Y-1) in Example 1. The results are shown in Table 1.

### <Comparative Example 2>

The pellets of the thermoplastic polymer composition (Y-1) obtained in Production Example 1 and the pellets of the (meth)acrylic resin (Z-1) obtained in Production Example 3 were separately input in hoppers of a single-screw extruder (VGM25-28EX; manufactured by G. M. ENGINEERING), coextruded by a multi-manifold die to obtain a two-layer film having a width of 300 mm and a thickness of 175 µm. The thickness of each of the layers was controlled by an extrusion flow rate to adjust the thickness of the thermoplastic polymer composition (Y-1) to be 100 µm and the thickness of the (meth)acrylic resin (Z-1) to be 75 µm.

The resultant two-layer film was stacked on the polyolefin resin (β) in the same manner as in Example 1 to produce a molded body. The results are shown in Table 1.

**[Table 1]**

| | | Example 1 | Example 2 | Example 3 | Example 5 | Example 6 | Comparative Example 1 | Comparative Example 2 |
|---|---|---|---|---|---|---|---|---|
| Decorative layer (Z) | (Meth)acrylic resin (Z-1) [µm] | 75 | 75 | 75 | | | 75 | 75 |
| | (Meth)acrylic resin (Z-2) [µm] | | | | 75 | | | |
| | Polycarbonate resin (Z-3) [µm] | | | | | 75 | | |
| Intermediate layer (Y) | Thermoplastic polymer composition (Y-1) [µm] | 100 | 100 | 100 | 100 | 100 | | 100 |
| | Thermoplastic elastomer (Y-3) [µm] | | | | | | 100 | |
| Polypropylene resin layer (X) | PP resin (X-1) [µm] | 225 | | | 225 | 225 | 225 | |
| | PP resin (X-2) [µm] | | 225 | | | | | |
| | PP resin (X-3) [µm] | | | 225 | | | | |
| Coextrusion film formability of intermediate layer (Y) and polypropylene resin layer (X) | | ∘ | ∘ | ∘ | ∘ | ∘ | × | × |
| | MFR ratio (Y)/(X) [g/10min@230°C, 2.16kg] | 4.9 | 8.2 | 9.3 | 4.9 | 4.9 | | - |
| Adhesion strength between multilayer film and polyolefin resin (β) (coextrusion molding) | | ∘∘ | ∘∘ | ∘∘ | ∘ | ∘∘ | ∘∘ | - |
| | [Adhesion strength [N/25mm] | Broken | Broken | Broken | 15 | Broken | Broken | - |
| Handling property in shaping molding of multilayer film | | ∘ | ∘ | ∘ | ∘ | ∘ | ∘ | - |

The multilayer films of Examples 1 to 6 were excellent in handling property during preform molding, since the polypropylene resin layer (X) is present. In Examples 1, 5 and 6 in which random polypropylene was used as the polypropylene resin layer (X), the warpage of the films particularly due to thermal lamination was successfully reduced. In Examples 1 to 3, 5 and 6 in which the MFR ratio (Y)/(X) of the polypropylene resin layer (X) and the intermediate layer (Y) is 1 to 10, particularly coextrusion film formability of the polypropylene resin layer (X) and the intermediate layer (Y) was excellent. In Examples 1 and 7 in which the content of the polypropylene resin (B) is 25 to 43 parts by mass relative to the thermoplastic elastomer (A)(100 parts by mass) in the thermoplastic polymer composition (Y-1), adhesiveness to the (meth)acrylic resin composition (Z-2) was excellent. In Examples 1 to 5 in which a (meth)acrylic resin was used as the decorative layer (Z), the decorative layer (Z) was excellent in weather resistance.

In Examples 1 to 6, since the multilayer film has a polypropylene resin layer (X), a molded body having extremely high adhesive force to the polyolefin resin (β) was obtained. In particular, Examples 1, 5 and 6 in which a random polypropylene was used as the polypropylene resin layer (X), the multilayer film and the polyolefin resin (β) were firmly bonded.

In contrast, Comparative Example 1 in which an intermediate layer (Y) is only formed of a thermoplastic elastomer, the multilayer film was inferior in industrial design and uniformity in thickness, because the coextrusion film formability of the polypropylene resin layer (X) and the intermediate layer (Y) is low. In Comparative Example 2 having no polypropylene resin layer (X), handling property during preform molding is low due to the absence of the polypropylene resin layer (X); and further the intermediate layer (Y) exposed deforms and flows out during injection molding of the polyolefin resin (β), with the result that a molded body partially and extremely weak in adhesion strength was only obtained.

### Reference Signs List

- 1: Multilayer film (α)
- 2: Injection-molding die
- 2a: Movable half
- 2b: Cavity side part
- 2c: Cavity portion
- 2d: Core part
- 2e: Sprue bush
- 3: Ejector body of injection molding machine
- 3a: Nozzle
- 3b: Cylinder
- 3c: Inline screw
- 4: Gate
- 5: Injection molded body (polyolefin resin (β))
- 5a: Molten polyolefin resin (β)
- 10: Laminated molding

## Claims

1. A multilayer film (1) having a structure consisting of at least three layers:
a polypropylene resin layer (X);
an intermediate layer (Y) formed of a thermoplastic polymer composition containing 100 parts by mass of a thermoplastic elastomer (A), which is a block copolymer containing a polymer block (a1) formed of an aromatic vinyl compound unit and a polymer block (a2) formed of a conjugate diene compound unit, or a hydrogenated product thereof, and 1 to 50 parts by mass of a polypropylene resin (B); and
a decorative layer (Z),
wherein the layers (X), (Y), and (Z) are stacked in this order,
wherein a content of a tackifier resin in the thermoplastic polymer composition is less than 1 mass%, and
wherein an MFR ratio (Y)/(X) of the intermediate layer (Y) to the polypropylene resin layer (X) is 3 to 10 at a temperature of 230°C and a load of 2.16 kg (21.2N).

2. The multilayer film (1) according to claim 1, wherein
the conjugate diene compound constituting the polymer block (a2) in the thermoplastic elastomer (A) is butadiene and/or isoprene, and
a total of an amount of 1,2-bond and an amount of 3,4-bond in the polymer block (a2) is 35 to 98 mol%.

3. The multilayer film (1) according to claim 1 or 2, wherein a content of the thermoplastic elastomer (A) in the thermoplastic polymer composition is 50 mass% or more.

4. The multilayer film (1) according to any one of claims 1 to 3, wherein the polypropylene resin (B) is a polar group-containing polypropylene resin (B1).

5. The multilayer film (1) according to any one of claims 1 to 4, wherein the polypropylene resin to be used in the polypropylene resin layer (X) has a melt flow rate (MFR) of 0.1 to 20 g/10 minutes, which is measured under conditions of a temperature 230°C and a load of 2.16 kg (21.2N).

6. The multilayer film (1) according to any one of claims 1 to 5, wherein the decorative layer (Z) at least has a layer formed of a resin film.

7. The multilayer film (1) according to claim 6, wherein the resin film is formed of a (meth)acrylic resin.

8. The multilayer film (1) according to claim 7, wherein
the (meth)acrylic resin contains a methacrylic resin (F) and an elastic body (R),
the methacrylic resin (F) has a structural unit derived from methyl methacrylate in a proportion of 80 mass% or more, and
a content of the methacrylic resin (F) is 10 to 99 parts by mass and a content of the elastic body (R) is 90 to 1 part by mass relative to the total (100 parts by mass) of the methacrylic resin (F) and the elastic body (R).

9. The multilayer film (1) according to claim 8, wherein the elastic body (R) is an acrylic block copolymer (G), which has a methacrylate polymer block (g1) containing a structural unit derived from a methacrylate and an acrylate polymer block (g2) containing a structural unit derived from an acrylate, and which contains the methacrylate polymer block (g1) in a proportion of 10 mass% to 70 mass%.

10. The multilayer film (1) according to claim 8, wherein
the elastic body (R) is a multilayer structural body (E) having at least one layer structure, which has at least two layers of an inner layer (e2) and an outer layer (e1) which are arranged in this order in the direction of a center layer to an outermost layer,
the outer layer (e1) contains 80 mass% or more of methyl methacrylate, and
the inner layer (e2) contains 70 to 99.8 mass% of alkyl acrylate and 0.2 to 30 mass% of a crosslinkable monomer.

11. The multilayer film (1) according to any one of claims 1 to 10, wherein a thickness ratio (Y)/(X) of the intermediate layer (Y) to the polypropylene resin layer (X) is 0.4 to 1.5.

12. A method for producing the multilayer film (1) according to anyone of claims 1 to 11, comprising:
bonding the decorative layer (Z) to a laminate film having the polypropylene resin layer (X) and the intermediate layer (Y) by thermal lamination using two heating rollers.

13. The method for producing the multilayer film (1) according to claim 12, further comprising a step of obtaining a laminate film of the polypropylene resin layer (X) and the intermediate layer (Y) by a coextrusion molding method.

14. A molded body (10) having the multilayer film (1) according to any one of claims 1 to 11 and a polyolefin resin (β) (5), wherein the polypropylene resin layer (X) in the multilayer film (1) is stacked on the polyolefin resin (β) (5).

15. A method for producing a molded body (10) obtained by stacking the polypropylene resin layer (X) in the following multilayer film (α) (1) on a polyolefin resin (β) (5), comprising:
a step (i) of placing the following multilayer film (α) (1) in a cavity (2c) of an injection-molding die (2), which is formed by clamping a movable half (2a) and a cavity side part (2b), such that the polypropylene resin layer (X) exposed surface faces a side to which a molten polyolefin resin (β) (5a) is to be injected and clamping the movable half (2a) and the cavity side part (2b); and
a step (ii) of injecting a molten polyolefin resin (β) (5a) into the cavity (2c),
wherein the multilayer film (α) (1) has a structure consisting of at least three layers:
a polypropylene resin layer (X);
an intermediate layer (Y) formed of a thermoplastic polymer composition containing 100 parts by mass of a thermoplastic elastomer (A), which is a block copolymer containing a polymer block (a1) formed of an aromatic vinyl compound unit and a polymer block (a2) formed of a conjugate diene compound unit or a hydrogenated product thereof, and 1 to 50 parts by mass of a polypropylene resin (B); and
a decorative layer (Z),
wherein the layers (X), (Y), and (Z) are stacked in this order,
wherein a content of a tackifier resin in the thermoplastic polymer composition is less than 1 mass%, and
wherein an MFR ratio (Y)/(X) of the intermediate layer (Y) to the polypropylene resin layer (X) is 3 to 10 at a temperature of 230°C and a load of 2.16 kg (21.2N).

## Patentansprüche

1. Mehrschichtfilm (1) mit einer Struktur, bestehend aus mindestens drei Schichten:
eine Polypropylenharzschicht (X);
eine Zwischenschicht (Y), gebildet aus einer thermoplastischen Polymerzusammensetzung, die 100 Massenteile eines thermoplastischen Elastomers (A), das ein Blockcopolymer, enthaltend einen aus einer aromatischen Vinyl-Verbindungseinheit gebildeten Polymerblock (a1) und einen aus einer konjugierten Dien-Verbindungseinheit gebildeten Polymerblock (a2), oder ein hydriertes Produkt davon, und 1 bis 50 Massenteile eines Polypropylenharzes (B) enthält; und
eine Dekorschicht (Z);
wobei die Schichten (X), (Y) und (Z) in dieser Reihenfolge gestapelt sind,
wobei ein Gehalt eines Klebrigmacherharzes in der thermoplastischen Polymerzusammensetzung weniger als 1 Massen-% beträgt, und
wobei ein MFR-Verhältnis (Y)/(X) der Zwischenschicht (Y) zu der Polypropylenharzschicht (X) bei einer Temperatur von 230 °C und einer Last von 2,16 kg (21,2 N) 3 bis 10 beträgt.

2. Mehrschichtfilm (1) nach Anspruch 1, wobei
die konjugierte Dien-Verbindung, die den Polymerblock (a2) in dem thermoplastischen Elastomer (A) bildet, Butadien und/oder Isopren ist, und eine Gesamtmenge einer Menge von 1,2-Bindung und einer Menge von 3,4-Bindung in dem Polymerblock (a2) 35 bis 98 Mol-% beträgt.

3. Mehrschichtfilm (1) nach Anspruch 1 oder 2, wobei ein Gehalt des thermoplastischen Elastomers (A) in der thermoplastischen Polymerzusammensetzung 50 Massen-% oder mehr beträgt.

4. Mehrschichtfilm (1) nach einem der Ansprüche 1 bis 3, wobei das Polypropylenharz (B) ein polare Gruppe-enthaltendes Polypropylenharz (B1) ist.

5. Mehrschichtfilm (1) nach einem der Ansprüche 1 bis 4, wobei das in der Polypropylenharzschicht (X) zu verwendende Polypropylenharz eine Schmelzfließrate (MFR) von 0,1 bis 20 g/10 Minuten aufweist, die unter Bedingungen einer Temperatur von 230 °C und einer Last von 2,16 kg (21,2 N) gemessen wird.

6. Mehrschichtfilm (1) nach einem der Ansprüche 1 bis 5, wobei die Dekorschicht (Z) mindestens eine aus einem Harzfilm gebildete Schicht aufweist.

7. Mehrschichtfilm (1) nach Anspruch 6, wobei der Harzfilm aus einem (Meth)acrylharz gebildet ist.

8. Mehrschichtfilm (1) nach Anspruch 7, wobei
das (Meth)acrylharz ein Methacrylharz (F) und einen elastischen Körper (R) enthält,
das Methacrylharz (F) eine von Methylmethacrylat abgeleitete Struktureinheit in einem Anteil von 80 Massen-% oder mehr aufweist, und
ein Gehalt des Methacrylharzes (F) 10 bis 99 Massenteile beträgt und ein Gehalt des elastischen Körpers (R) 90 bis 1 Massenteil beträgt, im Verhältnis zu der Gesamtmenge (100 Massenteile) des Methacrylharzes (F) und des elastischen Körpers (R).

9. Mehrschichtfilm (1) nach Anspruch 8, wobei der elastische Körper (R) ein Acrylblockcopolymer (G) ist, das einen eine von einem Methacrylat abgeleitete Struktureinheit enthaltenden Methacrylat-Polymerblock (g1) und einen eine von einem Acrylat abgeleitete Struktureinheit enthaltenden Acrylat-Polymerblock (g2) aufweist und das den Methacrylat-Polymerblock (g1) in einem Anteil von 10 Massen-% bis 70 Massen-% enthält.

10. Mehrschichtfilm (1) nach Anspruch 8, wobei
der elastische Körper (R) ein Mehrschichtstrukturkörper (E) mit mindestens einer Schichtstruktur ist, die mindestens zwei Schichten einer Innenschicht (e2) und einer Außenschicht (e1) aufweist, die in dieser Reihenfolge in der Richtung von einer Mittenschicht zu einer äußersten Schicht angeordnet sind,
die Außenschicht (e1) 80 Massen-% oder mehr Methylmethacrylat enthält, und
die Innenschicht (e2) 70 bis 99,8 Massen-% Alkylacrylat und 0,2 bis 30 Massen-% eines vernetzbaren Monomers enthält.

11. Mehrschichtfilm (1) nach einem der Ansprüche 1 bis 10, wobei ein Dickeverhältnis (Y)/(X) der Zwischenschicht (Y) zu der Polypropylenharzschicht (X) 0,4 bis 1,5 beträgt.

12. Verfahren zur Herstellung des Mehrschichtfilms (1) nach einem der Ansprüche 1 bis 11, umfassend:
Binden der Dekorschicht (Z) an einen Laminatfilm, aufweisend die Polypropylenharzschicht (X) und die Zwischenschicht (Y), durch thermische Laminierung unter Verwendung zweier Wärmewalzen.

13. Verfahren zur Herstellung des Mehrschichtfilms (1) nach Anspruch 12, weiter umfassend einen Schritt des Erhaltens eines Laminatfilms der Polypropylenharzschicht (X) und der Zwischenschicht (Y) durch ein Coextrusionsformverfahren.

14. Formkörper (10), aufweisend den Mehrschichtfilm (1) nach einem der Ansprüche 1 bis 11 und ein Polyolefinharz (β) (5), wobei die Polypropylenharzschicht (X) in dem Mehrschichtfilm (1) auf das Polyolefinharz (β) (5) gestapelt ist.

15. Verfahren zur Herstellung eines Formkörpers (10), erhalten durch Stapeln der Polypropylenharzschicht (X) in dem nachstehenden Mehrschichtfilm (a) (1) auf ein Polyolefinharz (β) (5), umfassend:
einen Schritt (i) des Anordnens des nachstehenden Mehrschichtfilms (a) (1) in einem Hohlraum (2c) eines Spritzgusswerkzeugs (2), der gebildet wird durch Einspannen einer beweglichen Hälfte (2a) und eines Hohlraumseitenteils (2b), sodass die freiliegende Oberfläche der Polypropylenharzschicht (X) einer Seite, zu der ein geschmolzenes Polyolefinharz (β) (5a) injiziert werden soll, gegenüberliegt, und des Einspannens der beweglichen Hälfte (2a) und des Hohlraumseitenteils (2b); und
einen Schritt (ii) des Injizierens eines geschmolzenen Polyolefinharzes (β) (5a) in den Hohlraum (2c),
wobei der Mehrschichtfilm (α) (1) eine aus mindestens drei Schichten bestehende Struktur aufweist:
eine Polypropylenharzschicht (X);
eine Zwischenschicht (Y), gebildet aus einer thermoplastischen Polymerzusammensetzung, die 100 Massenteile eines thermoplastischen Elastomers (A), welches ein Blockcopolymer, enthaltend einen aus einer aromatischen Vinyl-Verbindungseinheit gebildeten Polymerblock (a1) und einen aus einer konjugierten Dien-Verbindungseinheit gebildeten Polymerblock (a2), oder ein hydriertes Produkt davon, und 1 bis 50 Massenteile eines Polypropylenharzes (B) enthält; und
eine Dekorschicht (Z);
wobei die Schichten (X), (Y) und (Z) in dieser Reihenfolge gestapelt sind,
wobei ein Gehalt eines Klebrigmacherharzes in der thermoplastischen Polymerzusammensetzung weniger als 1 Massen-% beträgt, und
wobei ein MFR-Verhältnis (Y)/(X) der Zwischenschicht (Y) zu der Polypropylenharzschicht (X) bei einer Temperatur von 230 °C und einer Last von 2,16 kg (21,2 N) 3 bis 10 beträgt.

## Revendications

1. Film multicouche (1) ayant une structure consistant en au moins trois couches :
une couche de résine de polypropylène (X) ;
une couche intermédiaire (Y) constituée d'une composition en polymère thermoplastique contenant 100 parties en masse d'un élastomère thermoplastique (A), lequel est un copolymère séquencé contenant une séquence de polymère (a1) constituée d'un motif de composé vinylaromatique et une séquence de polymère (a2) constituée d'un motif de composé de diène conjugué ou d'un produit hydrogéné de celui-ci, et 1 à 50 parties en masse d'une résine de polypropylène (B) ;
et
une couche décorative (Z),
dans lequel les couches (X), (Y) et (Z) sont empilées dans cet ordre,
dans lequel la teneur en résine d'agent tackifiant dans la composition de polymère thermoplastique est inférieure à 1% en masse, et
dans lequel le rapport de MRF (Y)/(X) de la couche intermédiaire (Y) à la couche de résine de polypropylène (X) va de 3 à 10 à une température de 230°C et une charge de 2,16 kg (21,2 N).

2. Film multicouche (1) selon la revendication 1, dans lequel
le composé de diène conjugué constituant la séquence de polymère (a2) dans l'élastomère thermoplastique (A) est le butadiène et/ou l'isoprène, et
la quantité totale d'une liaison 1,2 et la quantité de liaison 3,4 dans la séquence de polymère (a2) va de 35 à 98% en mole.

3. Film multicouche (1) selon la revendication 1 ou 2, dans lequel la teneur en élastomère thermoplastique (A) dans la composition de polymère thermoplastique est de 50% en masse ou plus.

4. Film multicouche (1) selon l'une quelconque des revendications 1 à 3, dans lequel la résine de polypropylène (B) est une résine de polypropylène contenant un groupement polaire (B1).

5. Film multicouche (1) selon l'une quelconque des revendications 1 à 4, dans lequel la résine de polypropylène à utiliser dans la couche de résine de polypropylène (X) présente un indice de fluidité à l'état fondu (MFR) allant de 0,1 à 20 g/10 minutes, lequel est mesuré pour autant que la température soit de 230°C et que la charge soit de 2,16 kg (21,2 N).

6. Film multicouche (1) selon l'une quelconque des revendications 1 à 5, dans lequel la couche décorative (Z) a au moins une couche constituée d'un film de résine.

7. Film multicouche (1) selon la revendication 6, dans lequel le film de résine est constitué d'une résine (méth)acrylique.

8. Film multicouche (1) selon la revendication 7, dans lequel
la résine (méth)acrylique contient une résine méthacrylique (F) et un corps élastique (R), la résine méthacrylique (F) présente un motif structurel dérivé d'un méthylméthacrylate dans une proportion de 80% en masse ou plus, et
la teneur en résine méthacrylique (F) va de 10 à 99 parties en masse et la teneur en corps élastique (R) va de 90 à 1 partie en masse sur base du total (100 parties en masse) de la résine méthacrylique (F) et du corps élastique (R).

9. Film multicouche (1) selon la revendication 8, dans lequel le corps élastique (R) est un copolymère séquencé acrylique (G), lequel présente une séquence de polymère de méthacrylate (g1) contenant un motif structurel dérivé d'un méthacrylate et une séquence de polymère acrylate (g2) contenant un motif structurel dérivé d'un acrylate, et qui contient la séquence de polymère de méthacrylate (g1) dans une proportion allant de 10% en masse à 70% en masse.

10. Film multicouche (1) selon la revendication 8, dans lequel
le corps élastique (R) est un corps structurel multicouche (E) présentant au moins une structure en couches, laquelle a au moins deux couches parmi une couche intérieure (e2) et une couche extérieure (e1), lesquelles sont disposées dans cet ordre dans le sens couche centrale vers couche la plus extérieure,
la couche extérieure (e1) contient 80% en masse ou plus de méthylméthacrylate, et
la couche intérieure (e2) contient 70 à 99,8% en masse d'alkylacrylate et de 0,2 à 30% en masse d'un monomère pouvant réticuler.

11. Film multicouche (1) selon l'une quelconque des revendications 1 à 10, dans lequel le rapport d'épaisseur (Y)/(X) de la couche intermédiaire (Y) à la couche de résine de polypropylène (X) va de 0,4 à 1,5.

12. Procédé de production du film multicouche (1) selon l'une quelconque des revendications 1 à 12, comprenant :
la liaison de la couche décorative (Z) à un film stratifié comprenant la couche de résine de polypropylène (X) et la couche intermédiaire (Y) par stratification thermique en utilisant deux cylindres de chauffage.

13. Procédé de production du film multicouche (1) selon la revendication 12, comprenant en outre une étape où l'on obtient un film stratifié de la couche de résine de polypropylène (X) et de la couche intermédiaire (Y) par un procédé de moulage par co-extrusion.

14. Corps moulé (10) comprenant le film multicouche (1) selon l'une quelconque des revendications 1 à 11 et une résine de polyoléfine (β) (5), dans lequel la couche de résine de polypropylène (X) dans le film multicouche (1) s'empile sur la résine de polyoléfine (β) (5).

15. Procédé de production d'un corps moulé (10) obtenu par empilement de la couche de résine de polypropylène (X) dans le film multicouche (α) suivant (1) sur une résine de polyoléfine (β) (5), comprenant :
une étape (i) où l'on place le film multicouche (α) suivant (1) dans la cavité (2c) d'une matrice de moulage par injection (2), laquelle est formée par serrage d'une moitié mobile (2a) et d'une partie latérale de cavité (2b) de sorte que la surface exposée de la couche de résine de polypropylène (X) soit face à un côté auquel une résine de polyoléfine fondue (β) (5a) doit être injectée et serrage de la moitié mobile (2a) et de la partie latérale de cavité (2b) ; et
une étape (ii) où l'on injecte une résine de polyoléfine fondue (β) (5a) dans la cavité (2c),
dans lequel le film multicouche (α) (1) a une structure consistant en au moins trois couches :
une couche de résine de polypropylène (X) ;
une couche intermédiaire (Y) constituée d'une composition en polymère thermoplastique contenant 100 parties en masse d'un élastomère thermoplastique (A), lequel est un copolymère séquencé contenant une séquence de polymère (a1) constituée d'un motif de composé vinylaromatique et une séquence de polymère (a2) constituée d'un motif de composé de diène conjugué ou un produit hydrogéné de ceux-ci, et 1 à 50 parties en masse d'une résine de polypropylène (B) ; et
une couche décorative (Z),
dans lequel les couches (X), (Y) et (Z) sont empilées dans cet ordre,
dans lequel la teneur en résine d'agent tackifiant dans la composition de polymère thermoplastique est inférieure à 1% en masse, et
dans lequel le rapport de MRF (Y)/(X) de la couche intermédiaire (Y) à la couche de résine de polypropylène (X) va de 3 à 10 à une température de 230°C et une charge de 2,16 kg (21,2 N).
